# EUROPEAN PATENT APPLICATION

(11) **EP 4 708 799 A1**
(43) Date of publication of application: **11.03.2026**
(21) Application number: 25198706.1
(22) Date of filing: 28.08.2025
(51) Int. Cl.: H04L 41/0853, H04L 41/0869, H04L 41/08, H04L 41/16

(54) **AUTONOMOUS GENERATION OF NETWORK AND DEVICE CONFIGURATIONS**

(30) Priority: 09.09.2024 IN 202441067965; 13.11.2024 US 202418945955
(71) Applicant: INTEL Corporation, Santa Clara, CA 95054 (US)
(72) Inventor: GUZMAN, Mateo, Beaverton, OR 97078 (US); CARRANZA, Marcos, Portland, OR 97229 (US); BIEDERMAN, Daniel, Saratoga, CA 95070 (US); CHANG, Chihjen, Union City, CA 94587 (US); PETSINGER, Jeremy, Fort Collins, CO 80525 (US); LI, Yadong, Portland, OR 97229 (US); AGGARWAL, Mitu, Portland, OR 97229 (US); KULKARNI, Suyog, Portland, OR 97229 (US); ORTEGA DE MUES, Mariano, Hillsboro, OR 97124 (US); POORNACHANDRAN, Rajesh, Portland, OR 97229 (US); MARTINEZ-SPESSOT, Cesar, Hillsboro, OR 97123 (US); AGERSTAM, Mats, Portland, OR 97229 (US); GUIM BERNAT, Francesc, 08036 Barcelona (ES); KUMAR, Karthik, Chandler, AZ 85249 (US); AYYALASOMAYAJULA, Usharani, 560103 Bangalore (IN)
(74) Representative: HGF

(57) **Abstract**

Described herein are technique to enable the autonomous generation of configurations for a network environment, including but not limited to an edge network of a datacenter. Additional embodiments include prompt-based generation of network and device configurations and neural network based systems for adaptive network management.

## Description

### CROSS-REFERENCE

The application claims priority to India Provisional Application Number 202441067965, filed September 9, 2024, which is hereby incorporated by reference.

### BACKGROUND OF THE DISCLOSURE

The edge of a datacenter is a heterogenous environment that includes a variety of different types of nodes. The edge ecosystem is continuously providing many different types of ingredients, including a variety of hardware, firmware, and software configurations. The large number of hardware, firmware, and software configurations can result in a large number of configuration combinations to validate. The large number of potential configurations for edge network environments generates problems with configuration validation due to the expense and time required to validate the configurations. The difficulty in validating all potential configurations introduce a risk that customers may attempt to implement non-validated alternatives to validated configurations.

### BRIEF DESCRIPTION OF THE DRAWINGS

Embodiments described herein are illustrated by way of example and not limitation in the figures of the accompanying drawings in which like references indicate similar elements, and in which:
**FIG. 1** is a block diagram illustrating a computer system configured to implement one or more aspects of the embodiments described herein;
**FIG. 2** is a block diagram of a system that includes selected components of a datacenter;
**FIG. 3** is a block diagram of a portion of a datacenter, according to one or more examples of the present specification;
**FIG. 4A-4C** illustrates programmable forwarding elements and adaptive routing;
**FIG. 5A-5B** depicts example network interface devices;
**FIG. 6** is a block diagram illustrating a programmable network interface and data processing unit;
**FIG. 7** is a block diagram illustrating an IP core development system;
**FIG. 8** illustrates a system to enable large scale BKC generation for fleet management, according to an embodiment;
**FIG. 9** illustrates a system to autonomously generate knowledge base article updates based on generated BKCs;
**FIG. 10** illustrates a system to enable AI-defined networking (ADN) configurations, according to an embodiment;
**FIG. 11** illustrates a system to enable AI defined device configurations, according to an embodiment; and
**FIG. 12** illustrates a method to enable the autonomous generation of best known configurations, according to an embodiment.

### DETAILED DESCRIPTION

Support knowledge base (KB) articles for the various ingredients to edge environment configurations are required for products in the market and are generally used for setup and troubleshooting. Leveraging KB articles is a key area for edge network fleet management, considering the complexity of the edge network environment. These KB articles provide information on how to perform certain tasks or address different scenarios, such as how to deploy a new node using best known configurations for a certain OS version or reboot a device which has a specific firmware version. However, KB articles are static resources, which can become outdated over time. Due to the volume of articles within a support KB for a product, the maintenance of those articles can become costly.

Described herein are technique to enable the autonomous generation of configurations for a network environment. These configurations, which are known in the art as "best known configurations" (e.g., BKCs) are validated combinations of ingredients (e.g., operating system, firmware, low level software) for a specific hardware device or arrangement hardware devices. Artificial intelligence (AI) techniques are applied in which neural network models, including but not limited to large language models (LLMs) are used to autonomously generate new BKCs targeting optimized fleet topologies when new ingredients or configurations are added to the KB repositories and automatically validate the BKCs using spare infrastructure resources. New BKC versions will be tested considering the intended use of the node or operational constraints imposed on the node. In addition, by having this capability, recommendations can be provided to enable customers to migrate to alternative ingredients, such as different OSes or OS versions which may have increased performance. Once tested, the new BKC version is posted as available and an optional approval flow is triggered to make the BKC version available for production use. The scope of newly defined profiles may additionally include benchmarking/performance level testing to select UC in addition to other resource-based consumption optimizations that can be applied. Additionally, all related resources such as recipes and articles needed to support the new BKCs are autogenerated or adapted from previous versions. AI can be used to define the network and the routing through the network. AI can also use telemetry to continuously reconfigure the fleet as required any time. These techniques are also applicable to non-edge portions of a datacenter network and may be applied to a datacenter network in general.

In the following description, numerous specific details are set forth to provide a more thorough understanding. However, it will be apparent to one of skill in the art that the embodiments described herein may be practiced without one or more of these specific details. In other instances, well-known features have not been described to avoid obscuring the details of the present embodiments.

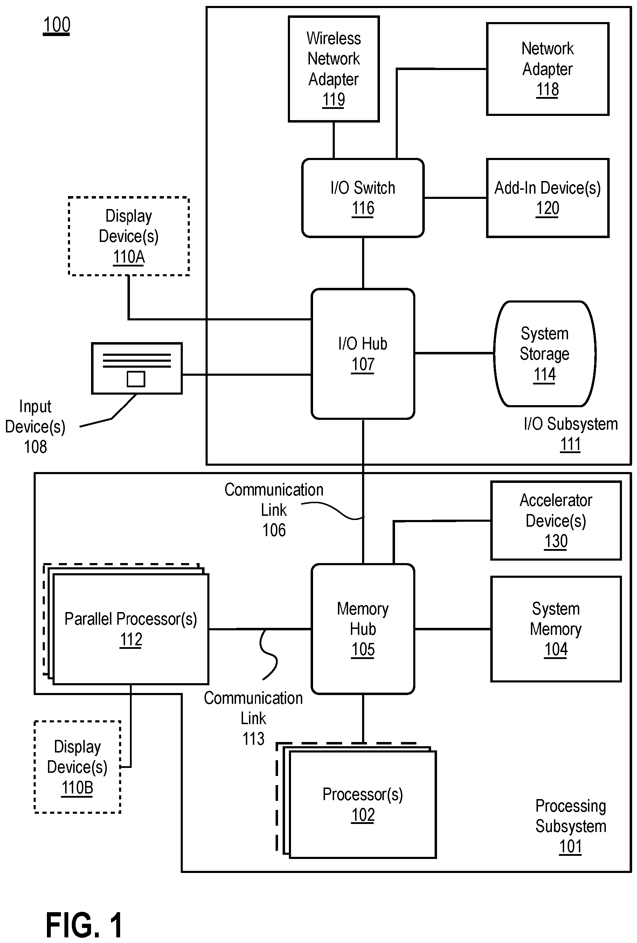

**FIG. 1** is a block diagram illustrating a computing system 100 configured to implement one or more aspects of the embodiments described herein. The computing system 100 includes a processing subsystem 101 having one or more processor(s) 102, such as central processing units (CPUs) or other host processors, and a system memory 104, which may communicate via an interconnection path that may include a memory hub 105. The memory hub 105 may be a separate component within a chipset component or may be integrated within the one or more processor(s) 102. The memory hub 105 couples with an I/O subsystem 111 via a communication link 106. The I/O subsystem 111 includes an I/O hub 107 that can enable the computing system 100 to receive input from one or more input device(s) 108. Additionally, the I/O hub 107 can enable a display controller, which may be included in the one or more processor(s) 102, to provide outputs to one or more display device(s) 110A. In one embodiment the one or more display device(s) 110A coupled with the I/O hub 107 can include a local, internal, or embedded display device.

The processing subsystem 101, for example, includes one or more parallel processor(s) 112 coupled to memory hub 105 via a communication link 113, such as a bus or fabric. The communication link 113 may be one of any number of standards-based communication link technologies or protocols, such as, but not limited to PCI Express, or may be a vendor specific communications interface or communications fabric. The one or more parallel processor(s) 112 may form a computationally focused parallel or vector processing system that can include a large number of processing cores and/or processing clusters, such as a many integrated core (MIC) processor. For example, the one or more parallel processor(s) 112 form a graphics processing subsystem that can output pixels to one of the one or more display device(s) 110A coupled via the I/O hub 107. The one or more parallel processor(s) 112 can also include a display controller and display interface (not shown) to enable a direct connection to one or more display device(s) 110B.

Within the I/O subsystem 111, a system storage unit 114 can connect to the I/O hub 107 to provide a storage mechanism for the computing system 100. An I/O switch 116 can be used to provide an interface mechanism to enable connections between the I/O hub 107 and other components, such as a network adapter 118 and/or wireless network adapter 119 that may be integrated into the platform, and various other devices that can be added via one or more add-in device(s) 120. The add-in device(s) 120 may also include, for example, one or more external graphics processor devices, graphics cards, and/or compute accelerators. The network adapter 118 can be an Ethernet adapter or another wired network adapter. The wireless network adapter 119 can include one or more of a Wi-Fi, Bluetooth, near field communication (NFC), or other network device that includes one or more wireless radios.

The computing system 100 can include other components not explicitly shown, including USB or other port connections, optical storage drives, video capture devices, and the like, which may also be connected to the I/O hub 107. Communication paths interconnecting the various components in FIG. 1 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL*^{™}*) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), Internet Protocol (IP), User Datagram Protocol (UDP), quick UDP Internet Connections (QUIC), RDMA over Converged Ethernet (RoCE), Ultra Ethernet Transport (UET), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, Open Coherent Accelerator Processor Interface (CAPI), Gen-Z, Cache Coherent Interconnect for Accelerators (CCIX), 3rd Generation Partnership Projects (3GPP) Long Term Evolution (LTE) (e.g., 4th generation (4G)), 3GPP 5th generation (5G), and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe. In one embodiment, time-aware communication protocols are supported, including time-aware RDMA, time-aware NVME, and time-aware NVME-oF, in which a precise time and rate of data consumption is used to control the transfer of data.

The one or more parallel processor(s) 112 may incorporate circuitry optimized for graphics and video processing, including, for example, video output circuitry, and constitutes a graphics processing unit (GPU). Alternatively or additionally, the one or more parallel processor(s) 112 can incorporate circuitry optimized for general purpose processing, while preserving the underlying computational architecture, described in greater detail herein. Components of the computing system 100 may be integrated with one or more other system elements on a single integrated circuit. For example, the one or more parallel processor(s) 112, memory hub 105, processor(s) 102, and I/O hub 107 can be integrated into a system on chip (SoC) integrated circuit. Alternatively, the components of the computing system 100 can be integrated into a single package to form a system in package (SiP) configuration. In one embodiment at least a portion of the components of the computing system 100 can be integrated into a multi-chip module (MCM), which can be interconnected with other multi-chip modules into a modular computing system.

In some configurations, the computing system 100 includes one or more accelerator device(s) 130 coupled with the memory hub 105, in addition to the processor(s) 102 and the one or more parallel processor(s) 112. The accelerator device(s) 130 are configured to perform domain specific acceleration of workloads to handle tasks that are computationally intensive or require high throughput. The accelerator device(s) 130 can reduce the burden placed on the processor(s) 102 and/or parallel processor(s) 112 of the computing system 100. The accelerator device(s) 130 can include but are not limited to smart network interface cards, data processing units, cryptographic accelerators, storage accelerators, artificial intelligence (AI) accelerators, neural processing units (NPUs), storage accelerators, and/or video transcoding accelerators.

It will be appreciated that the computing system 100 shown herein is illustrative and that variations and modifications are possible. The connection topology, including the number and arrangement of bridges, the number of processor(s) 102, and the number of parallel processor(s) 112, may be modified as desired. For instance, system memory 104 can be connected to the processor(s) 102 directly rather than through a bridge, while other devices communicate with system memory 104 via the memory hub 105 and the processor(s) 102. In other alternative topologies, the parallel processor(s) 112 are connected to the I/O hub 107 or directly to one of the one or more processor(s) 102, rather than to the memory hub 105. In other embodiments, the I/O hub 107 and memory hub 105 may be integrated into a single chip. It is also possible that two or more sets of processor(s) 102 are attached via multiple sockets, which can couple with two or more instances of the parallel processor(s) 112.

Some of the particular components shown herein are optional and may not be included in all implementations of the computing system 100. For example, any number of add-in cards or peripherals may be supported, or some components may be eliminated. Furthermore, some architectures may use different terminology for components similar to those illustrated in FIG. 1.

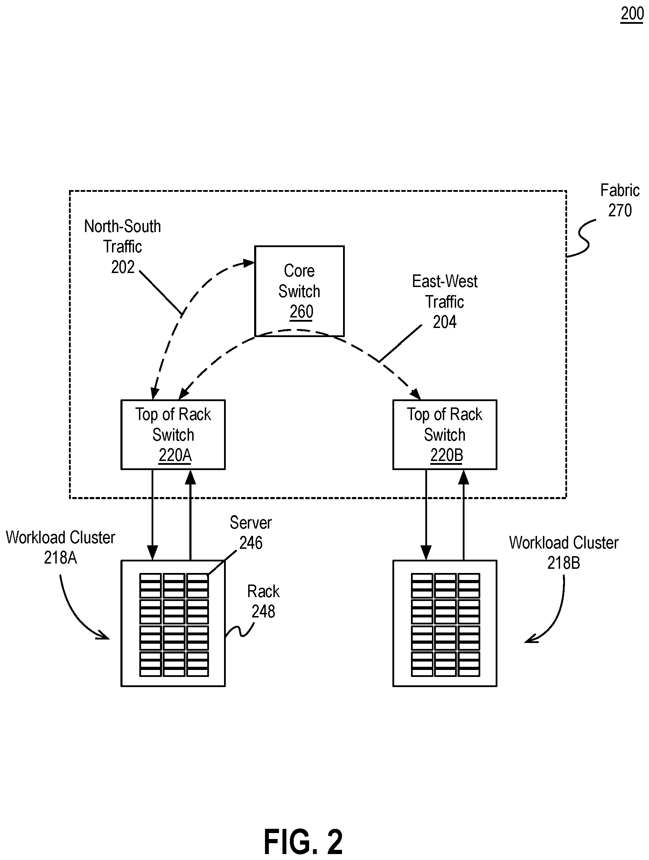

**FIG. 2** is a block diagram of a system 200 that includes selected components of a datacenter. The components of the illustrated datacenter may reside, for example within a cloud service provider (CSP), or another datacenter, which may be, by way of nonlimiting example, a traditional enterprise datacenter, an enterprise "private cloud," or a "public cloud," providing services such as infrastructure as a service (IaaS), platform as a service (PaaS), or software as a service (SaaS). The system 200 includes some number of workload clusters, including but not limited to workload cluster 218A and workload cluster 218B. The workload clusters may be clusters of individual servers, blade servers, rackmount servers, or any other suitable server topology.

The system 200 may include workload clusters 218A-218B. The workload clusters 218A-218B can include a rack 248 that houses multiple servers (e.g., server 246). The rack 248 and the servers of the workload clusters 218A-218B may conform to the rack unit ("U") standard, in which one rack unit conforms to a 19 inch wide rack frame and a full-sized industry standard rack accommodates 42 units (42U) of equipment. One unit (1U) of equipment (e.g., a 1U server) may be 1.75 inches high and approximately 36 inches deep. In various configurations, compute resources such as processors, memory, storage, accelerators, and switches may fit into some multiple of rack units within a rack 248.

A server 246 may host a standalone operating system configured to provide server functions, or the servers may be virtualized. A virtualized server may be under the control of a virtual machine manager (VMM), hypervisor, and/or orchestrator, and may host one or more virtual machines, virtual servers, or virtual appliances. The workload clusters 218A-218B may be collocated in a single datacenter, or may be located in different geographic datacenters. Depending on the contractual agreements, some servers may be specifically dedicated to certain enterprise clients or tenants while other servers may be shared.

The various devices in a datacenter may be interconnected via a switching fabric 270, which may include one or more high speed routing and/or switching devices. The switching fabric 270 may provide north-south traffic 202 (e.g., traffic to and from the wide area network (WAN), such as the internet), and east-west traffic 204 (e.g., traffic across the datacenter). Historically, north-south traffic 202 accounted for the bulk of network traffic, but as web services become more complex and distributed, the volume of east-west traffic 204 has risen. In many datacenters, east-west traffic 204 now accounts for the majority of traffic. Furthermore, as the capability of a server 246 increases, traffic volume may further increase. For example, a server 246 may provide multiple processor slots, with a slot accommodating a processor having four to eight cores, along with sufficient memory for the cores. Thus, a server may host a number of VMs that may be a source of traffic generation.

To accommodate the large volume of traffic in a datacenter, a highly capable implementation of the switching fabric 270 may be provided. The illustrated implementation of the switching fabric 270 is an example of a flat network in which a server 246 may have a direct connection to a top-of-rack switch (ToR switch 220A-220B) (e.g., a "star" configuration). ToR switch 220A can connect with a workload cluster 218A, while ToR switch 220B can connect with workload cluster 218B. A ToR switch 220A-220B may couple to a core switch 260. This two-tier flat network architecture is shown only as an illustrative example and other architectures may be used, such as three-tier star or leaf-spine (also called "fat tree" topologies) based on the "Clos" architecture, hub-and-spoke topologies, mesh topologies, ring topologies, or 3-D mesh topologies, by way of nonlimiting example.

The switching fabric 270 may be provided by any suitable interconnect using any suitable interconnect protocol. For example, a server 246 may include a fabric interface (FI) of some type, a network interface card (NIC), or other host interface. The host interface itself may couple to one or more processors via an interconnect or bus, such as PCI, PCIe, or similar, and in some cases, this interconnect bus may be considered to be part of the switching fabric 270. The switching fabric may also use PCIe physical interconnects to implement more advanced protocols, such as compute express link (CXL).

The interconnect technology may be provided by a single interconnect or a hybrid interconnect, such as where PCIe provides on-chip communication, 1Gb or 10Gb copper Ethernet provides relatively short connections to a ToR switch 220A-220B, and optical cabling provides relatively longer connections to core switch 260. Interconnect technologies include, by way of nonlimiting example, Ultra Path Interconnect (UPI), FibreChannel, Ethernet, FibreChannel over Ethernet (FCoE), InfiniBand, PCIe, NVLink, or fiber optics, to name just a few. Some of these will be more suitable for certain deployments or functions than others, and selecting an appropriate fabric for the instant application is an exercise of ordinary skill.

In one embodiment, the switching elements of the switching fabric 270 are configured to implement switching techniques to improve the performance of the network in high usage scenarios. Exemplary advanced switching techniques include but are not limited to adaptive routing, adaptive fault recovery, and adaptive and/or telemetry-based congestion control.

Adaptive routing enables a ToR 220A-220B switch and/or core switch 260 to select the output port to which traffic is switched based on the load on the selected port, assuming unconstrained port selection is enabled. An adaptive routing table can configure the forwarding tables of switches of the switching fabric 270 to select between multiple ports between switches when multiple connections are present between a given set of switches in an adaptive routing group. Adaptive fault recovery (e.g., self-healing) enables the automatic selection of an alternate port if the ported selected by the forwarding table port is in a failed or inactive state, which enables rapid recovery in the event of a switch-to-switch port failure. A notification can be sent to neighboring switches when adaptive routing or adaptive fault recovery becomes active in a given switch. Adaptive congestion control configures a switch to send a notification to neighboring switches when port congestion on that switch exceeds a configured threshold, which may cause those neighboring switches to adaptively switch to uncongested ports on that switch or switches associated with an alternate route to the destination.

Telemetry-based congestion control uses real-time monitoring of telemetry from network devices, such as switches within the switching fabric 270, to detect when congestion will begin to impact the performance of the switching fabric 270 and proactively adjust the switching tables within the network devices to prevent or mitigate the impending congestion. A ToR 220A-220B switch and/or core switch 260 can implement a built-in telemetry-based congestion control algorithm or can provide an application programming interface (API) though which a programmable telemetry-based congestion control algorithm can be implemented. A continuous feedback loop may be implemented in which the telemetry-based congestion control system continuously monitors the network and adjusts the traffic flow in real-time based on ongoing telemetry data. Learning and adaptation can be implemented by the telemetry-based congestion control system in which the system can adapt to changing network conditions and improve its congestion control strategies based on historical data and trends.

Note however that while high-end fabrics are provided herein by way of illustration, more generally, the switching fabric 270 may include any suitable interconnect or bus for the particular application, including legacy interconnects used to implement a local area network (LANs), synchronous optical networks (SONET), asynchronous transfer mode (ATM) networks, wireless networks such as Wi-Fi and Bluetooth, 4G wireless, 5G wireless, digital subscriber line (DSL) interconnects, multimedia over coax alliance (MoCA) interconnects, or similar wired or wireless networks. It is also expressly anticipated that in the future, new network technologies will arise to supplement or replace some of those listed here, and any such future network topologies and technologies can be or form a part of the switching fabric 270.

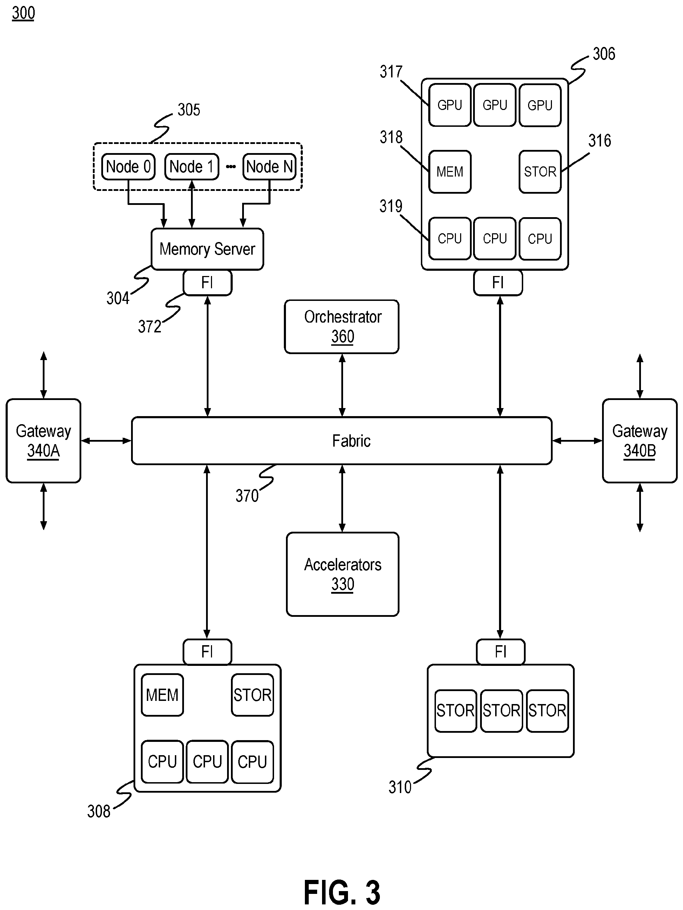

**FIG. 3** is a block diagram of a portion of a datacenter 300, according to one or more examples of the present specification. The illustrated portion of the datacenter 300 is not intended to include all components of a datacenter. The illustrated portion may be duplicated multiple times within the datacenter 300 and/or the datacenter 300 may include portions beyond the illustrated portions, depending on the capacity and functionality intended to be provided by the datacenter 300. The datacenter 300 may be, in various embodiments include components of the datacenter of the system 200 of FIG. 2, or may be a different datacenter.

The datacenter 300 includes a number of logic elements forming a plurality of nodes, where a node may be provided by a physical server, a group of servers, or other hardware. A server may also host one or more virtual machines, as appropriate to its application. A fabric 370 is provided to interconnect various aspects of datacenter 300. The fabric 370 may be provided by any suitable interconnect technology, including but not limited to InfiniBand, Ethernet, PCIe, or CXL. The fabric 370 of the datacenter 300 may be a version of and/or include elements of the switching fabric 270 of the system 200 of FIG. 2. The fabric 370 of datacenter 300 can interconnect datacenter elements that include server nodes (e.g., memory server node 304, heterogenous compute server node 306, CPU server node 308, storage server node 310), accelerators 330, gateways 340A-340B to other fabrics, fabric architectures, or interconnect technologies, and an orchestrator 360.

The server nodes of the datacenter 300 can include but are not limited to a memory server node 304, a heterogenous compute server node 306, a CPU server node 308, and a storage server node 310. The heterogenous compute server node 306 and a CPU server node 308 can perform independent operations for different tenants or cooperatively perform operations for a single tenant. The heterogenous compute server node 306 and a CPU server node 308 can also host virtual machines that provide virtual server functionality to tenants of the datacenter.

The server nodes can connect with the fabric 370 via a fabric interface 372. The specific type of fabric interface 372 that is used depends at least in part on the technology or protocol that is used to implement the fabric 370. For example, where the fabric 370 is an Ethernet fabric, the fabric interface 372 may be an Ethernet network interface controller. Where the fabric 370 is a PCIe-based fabric, the fabric interfaces may be PCIe-based interconnects. Where the fabric 370 is an InfiniBand fabric, the fabric interface 372 of the heterogenous compute server node 306 and a CPU server node 308 may be a host channel adapter (HCA), while the fabric interface 372 of the memory server node 304 and storage server node 310 may be a target channel adapter (TCA). TCA functionality may be an implementation-specific subset of HCA functionality. The various fabric interfaces may be implemented as intellectual property (IP) blocks that can be inserted into an integrated circuit as a modular unit, as can other circuitry within the datacenter 300.

The heterogenous compute server node 306 includes multiple CPU sockets that can house a CPU 319, which may be, but is not limited to an Intel^{®} Xeon^{™} processor including a plurality of cores. The CPU 319 may also be, for example, a multi-core datacenter class ARM^{®} CPU, such as an NVIDIA^{®} Grace^{™} CPU. The heterogenous compute server node 306 includes memory devices 318 to store data for runtime execution and storage devices 316 to enable the persistent storage of data within non-volatile memory devices. The heterogenous compute server node 306 is enabled to perform heterogenous processing via the presence of GPUs (e.g., GPU 317), which can be used, for example, to perform high-performance compute (HPC), media server, cloud gaming server, and/or machine learning compute operations. In one configuration, the GPUs may be interconnected and CPUs of the heterogenous compute server node 306 via interconnect technologies such as PCIe, CXL, or NVLink.

The CPU server node 308 includes a plurality of CPUs (e.g., CPU 319), memory (e.g., memory devices 318) and storage (storage devices 316) to execute applications and other program code that provide server functionality, such as web servers or other types of functionality that is remotely accessible by clients of the CPU server node 308. The CPU server node 308 can also execute program code that provides services or micro-services that enable complex enterprise functionality. The fabric 370 will be provisioned with sufficient throughput to enable the CPU server node 308 to be simultaneously accessed by a large number of clients, while also retaining sufficient throughput for use by the heterogenous compute server node 306 and to enable the use of the memory server node 304 and the storage server node 310 by the heterogenous compute server node 306 and the CPU server node 308. Furthermore, in one configuration, the CPU server node 308 may rely primarily on distributed services provided by the memory server node 304 and the storage server node 310, as the memory and storage of the CPU server node 308 may not be sufficient for all of the operations intended to be performed by the CPU server node 308. Instead, a large pool of high-speed or specialized memory may be dynamically provisioned between a number of nodes, so that the nodes have access to a large pool of resources, but those resources do not sit idle when that particular node does not need them. A distributed architecture of this type is possible due to the high speeds and low latencies provided by the fabric 370 of contemporary datacenters and may be advantageous because there is no need to over-provision resources for the server nodes.

The memory server node 304 can include memory nodes 305 having memory technologies that are suitable for the storage of data used during the execution of program code by the heterogenous compute server node 306 and the CPU server node 308. The memory nodes 305 can include volatile memory modules, such as DRAM modules, and/or non-volatile memory technologies that can operate similar to DRAM speeds, such that those modules have sufficient throughput and latency performance metrics to be used as a tier of system memory at execution runtime. The memory server node 304 can be linked with the heterogenous compute server node 306 and/or CPU server node 308 via technologies such as CXL.mem, which enables memory access from a host to a device. In such configuration, a CPU 319 of the heterogenous compute server node 306, a CPU server node 308 can link to the memory server node 304 and access the memory nodes 305 of the memory server node 304 in a similar manner as, for example, the CPU 319 of the heterogenous compute server node 306 can access device memory of a GPU within the heterogenous compute server node 306. For example, the memory server node 304 may provide remote direct memory access (RDMA) to the memory nodes 305, in which, for example, the CPU server node 308 may access memory resources on the memory server node 304 via the fabric 370 using direct memory access (DMA) operations, in a similar manner as how the CPU would access its own onboard memory.

The memory server node 304 can be used by the heterogenous compute server node 306 and CPU server node 308 to expand the runtime memory that is available during memory-intensive activities such as the training of machine learning models. A tiered memory system can be enabled in which model data can be swapped into and out of the memory devices 318 of the heterogenous compute server node 306 to memory of the memory server node 304 at higher performance and/or lower latency than local storage (e.g., storage devices 316). During workload execution setup, the entire working set of data may be loaded into one or more of the memory nodes 305 of the memory server node 304 and loaded into the memory devices 318 of the heterogenous compute server node 306 as needed during execution of a heterogenous workload.

The storage server node 310 provides storage functionality to the heterogenous compute server node 306, the CPU server node 308, and potentially the memory server node 304. The storage server node 310 may provide a networked bunch of disks or just a bunch of disks (JBOD), program flash memory (PFM), redundant array of independent disks (RAID), redundant array of independent nodes (RAIN), network attached storage (NAS), or other nonvolatile memory solutions. In one configuration, the storage server node 310 can couple with the heterogenous compute server node 306, the CPU server node 308, and/or the memory server node 304 such as NVMe-oF, which enables the NVME protocol to be implemented over the fabric 370. In such configurations, the fabric interface 372 of those servers may be smart interfaces that include hardware to accelerate NVMe-oF operations.

The accelerators 330 within the datacenter 300 can provide various accelerated functions, including hardware or coprocessor acceleration for functions such as packet processing, encryption, decryption, compression, decompression, network security, or other accelerated functions in the datacenter. In some examples, accelerators 330 may include deep learning accelerators, such as neural processing units (NPU), that can receive offload of matrix multiply operations of other neural network operations from the heterogenous compute server node 306 or the CPU server node 308. In some configurations, the accelerators 330 may reside in a dedicated accelerator server or distributed throughout the various server nodes of the datacenter 300. For example, an NPU may be directly attached to one or more CPU cores within the heterogenous compute server node 306 or the CPU server node 308. In some configurations, the accelerators 330 can include or be included within smart network controllers, infrastructure processing units (IPUs), or data processing units, which combine network controller functionality with accelerator, processor, or coprocessor functionality. The accelerators 330 can also include edge processing units (EPU) to perform real-time inference operations at the edge of the network.

In one configuration, the datacenter 300 can include gateways 340A-340B from the fabric 370 to other fabrics, fabric architectures, or interconnect technologies. For example, where the fabric 370 is an InfiniBand fabric, the gateways 340A-340B may be gateways to an Ethernet fabric. Where the fabric 370 is an Ethernet fabric, the gateways 340A-340B may include routers to route data to other portions of the datacenter 300 or to a larger network, such as the Internet. For example, a first gateway 340A may connect to a different network or subnet within the datacenter 300, while a second gateway 340B may be a router to the Internet.

The orchestrator 360 manages the provisioning, configuration, and operation of network resources within the datacenter 300. The orchestrator 360 may include hardware or software that executes on a dedicated orchestration server. The orchestrator 360 may also be embodied within software that executes, for example, on the CPU server node 308 that configures software defined networking (SDN) functionality of components within the datacenter 300. In various configurations, the orchestrator 360 can enable automated provisioning and configuration of components of the datacenter 300 by performing network resource allocation and template-based deployment. Template-based deployment is a method for provisioning and managing IT resources using predefined templates, where the templates may be based on standard templates required by the government, service provider, financial, standard or customer. The template may also dictate service level agreements (SLA) or service level obligations (SLO). The orchestrator 360 can also perform functionality including but not limited to load balancing and traffic engineering, network segmentation, security automation, real-time telemetry monitoring, and adaptive switching management, including telemetry-based adaptive switching. In some configurations, the orchestrator 360 can also provide multi-tenancy and virtualization support by enabling virtual network management, including the creation and deletion of virtual LANs (VLANs) and virtual private networks (VPNs), and tenant isolation for multi-tenant datacenters.

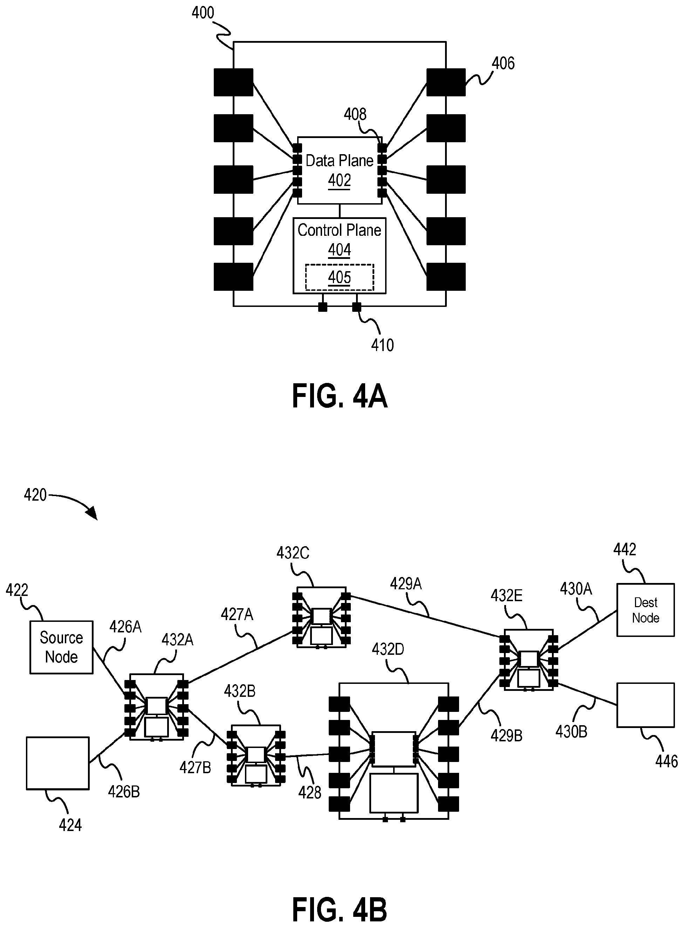

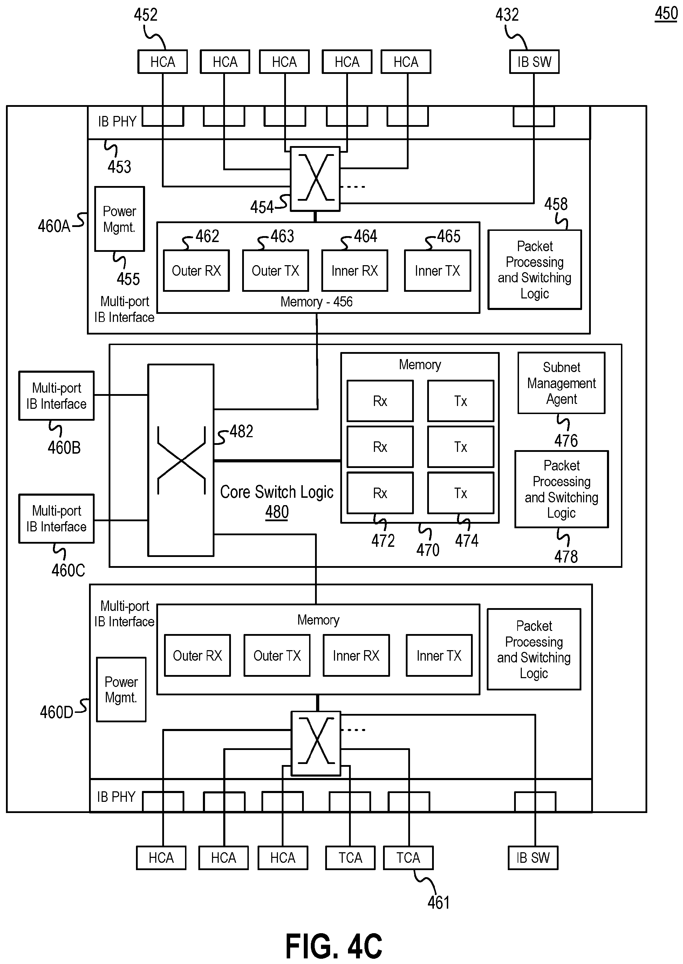

**FIG. 4A-4C** illustrates programmable forwarding elements and adaptive routing. FIG. 4A illustrates a forwarding element that includes a control plane and a programmable data plane. FIG. 4B illustrates a network having switching devices configured to perform adaptive routing and telemetry-based congestion control. FIG. 4C illustrates an InfiniBand switch including multi-port IB interfaces.

FIG. 4A shows a forwarding element 400 that can be configured to forward data messages within a network based on a program provided by a user. The program, in some embodiments, includes instructions for forwarding data messages, as well as performing other processes such as firewall, denial of service attack protection, and load balancing operations. The forwarding element 400 can be any type of forwarding element, including but not limited to a switch, a router, or a bridge. The forwarding element 400 can forward data messages associated with various technologies, such as but not limited to Ethernet, Ultra Ethernet, InfiniBand, or NVLink.

In various network configurations, the forwarding element is deployed as a non-edge forwarding element in the interior of the network to forward data messages from a source device to a destination device. In network configurations, the forwarding element 400 is deployed as an edge forwarding element at the edge of the network to connect to compute devices (e.g., standalone or host computers) that serve as sources and destinations of the data messages. As a non-edge forwarding element, the forwarding element 400 forwards data messages between forwarding elements in the network, such as through an intervening network fabric. As an edge forwarding element, the forwarding element 400 forwards data messages to and from edge compute devices, to other edge forwarding elements and/or to non-edge forwarding elements.

The forwarding element 400 includes circuitry to implement a data plane 402 that performs the forwarding operations of the forwarding element 400 to forward data messages received by the forwarding element to other devices. The forwarding element 400 also includes circuitry to implement a control plane 404 that configures the data plane circuit. Additionally, the forwarding element 400 includes physical ports 406 that receive data messages from, and transmit data messages to, devices outside of the forwarding element 400. The data plane 402 includes ports 408 that receive data messages from the physical ports 406 for processing. The data messages are processed and forwarded to another port on the data plane 402, which is connected to another physical port of the forwarding element 400. In addition to being associated with physical ports of the forwarding element 400, some of the ports 408 on the data plane 402 may be associated with other modules of the data plane 402.

The data plane includes programmable packet processor circuits that provide several programmable message-processing stages that can be configured to perform the data-plane forwarding operations of the forwarding element 400 to process and forward data messages to their destinations. These message-processing stages perform these forwarding operations by processing data tuples (e.g., message headers) associated with data messages received by the data plane 402 in order to determine how to forward the messages. The message-processing stages include match-action units (MAUs) that try to match data tuples (e.g., header vectors) of messages with table records that specify action to perform on the data tuples. In some embodiments, table records are populated by the control plane 404 and are not known when configuring the data plane to execute a program provided by a network user. The programmable message-processing circuits are grouped into multiple message-processing pipelines. The message-processing pipelines can be ingress or egress pipelines before or after the forwarding element's traffic management stage that directs messages from the ingress pipelines to egress pipelines.

The specifics of the hardware of the data plane 402 depends on the communication protocol implemented via the forwarding element 400. Ethernet switches use application specific integrated circuits (ASICs) designed to handle Ethernet frames and the TCP/IP protocol stack. These ASICs are optimized for a broad range of traffic types, including unicast, multicast, and broadcast. Ethernet switch ASICs are generally designed to balance cost, power consumption, and performance, although high-end Ethernet switches may support more advanced features such as deep packet inspection and advanced QoS (Quality of Service). InfiniBand switches use specialized ASICs designed for ultra-low latency and high throughput. These ASICs enable features such as optimized for handling the InfiniBand protocol and provide support for RDMA and other features that require precise timing and high-speed data processing, although high-end Ethernet switches may support RoCE (RDMA over Converged Ethernet), which offers similar benefits to InfiniBand but with higher latency compared to native InfiniBand RDMA.

The forwarding element 400 may also be configured as an NVLink switch (e.g., NVSwitch), which is used to interconnect multiple graphics processors via the NVLink connection protocol. When configured as an NVLink switch, the forwarding element 400 can provide GPU servers with increased GPU to GPU bandwidth relative to GPU servers interconnected via InfiniBand. An NVLink switch can reduce network traffic hotspots that may occur when interconnected GPU-equipped servers execute operations such as distributed neural network training.

In general, where the data plane 402, in concert with a program executed on the data plane 402 (e.g., a program written in the P4 language), performs message or packet forwarding operations for incoming data, the control plane 404 determines how messages or packets should be forwarded. The behavior of a program executed on the data plane 402 is determined in part by the control plane 404, which populates match-action tables with specific forwarding rules. The forwarding rules that are used by the program executed on the data plane 402 are independent of the data plane program itself. In one configuration, the control plane can couple with a management port 410 that enables administrator configuration of the forwarding element 400. The data connection that is established via the management port 410 is separate from the data connections for ingress and egress data ports. In one configuration, the management ports 410 may connect with a management plane 405, which facilitates administrative access to the device, enables the analysis of device state and health, and enables device reconfiguration. The management plane 405 may be a portion of the control plane 404 or in direct communication with the control plane 404. In one implementation, there is no direct access for the administrator to components of the control plane 404. Instead, information is gathered by the management plane 405 and the changes to the control plane 404 are carried out by the management plane 405.

FIG. 4B shows a network 420 having switches 432A-432E with support for adaptive routing and telemetry-based congestion control. The network 420 can be implemented using a variety of communication protocols described herein. In one embodiment, the network 420 is implemented using the InfiniBand protocol. In one embodiment, the network 420 is an Ethernet, converged Ethernet, or Ultra Ethernet network. The network 420 may include aspects of the fabric 370 of FIG. 3. The switches 432A-432E may be an implementation of the forwarding element 400 of FIG. 4A. The network 420 provides packet-based communication for multiple nodes (e.g., node 424, node 446), including a source node 422 and a destination node 442 of a data transfer to be performed over the network 420. Packets of a flow are forwarded over a route through the network 420 that traverses the switches (switch 432A-432E) and links (link 426A-426B, 427A-427B, 428, 429A-429B, 430A-430B) of the network 420. In an InfiniBand application, the switches and links belong to a certain InfiniBand subnet that is managed by a Subnet Manager (SM), which may be included within one of the switches (e.g., switch 432D). The source node 422 and the destination node 442 are the source and destination nodes for an exemplary dataflow. Depending on the configuration of the network 420, packets may flow from any node to any other node via one or more paths.

The switches 432A-432E include a data plane 402, a control plane 404, a management plane 405, and physical ports 406, as in the forwarding element 400 of FIG. 4A. A processor of the control plane 404 can be used to implement adaptive routing techniques to adjust a route between the source node 422 and the destination node 442 based on the current state of the network. During network operation, the route from the source node 422 to the destination node 442 may at some point become unsuitable or compromised in its ability to transfer packets due to various events, such as congestion, link fault, or head-of-line blocking. Should such scenario occur, the switched 432A-432E can be configured to dynamically adapt the route of the packets that flow along a compromised path.

An adaptive routing (AR) event may be detected by one of the switches along a route that becomes compromised, for example, when the switch when it attempts to output packets on a designated output port. For example, an exemplary data from the source node 422 to the destination node 442 can traverse links through switches of the network. An AR event may be detected by switch 432D for link 429B, for example, in response to congestion or a link fault associated with link 429B. Upon detecting the AR event, switch 432D, as the detecting switch, generates an adaptive routing notification (ARN), which has an identifier that distinguishes an ARN packet from other packet types. In various embodiments, the ARN includes parameters such as an identifier for the detecting switch, the type of AR event, and the source and destination address of the flow that triggered the AR event, and/or any other suitable parameters. The detecting switch sends the ARN backwards along the route to the preceding switches. The ARN may include a request for notified switches to modify the route to avoid traversal of the detected switch. A notified switch can then evaluate whether its routes may be modified to bypass the detecting switch. Otherwise, the switch forwards the ARN to the previous preceding switch along the route. In this scenario, switch 432B is not able to avoid switch 432D and will relay the ARN to switch 432A. Switch 432A can determine to adapt the route to the destination node 442 by using link 427A to switch 432C. Switch 432C can reach switch 432E via link 429A, allowing packets from the source node 422 to reach the destination node 442 while bypassing the AR event related to link 429B.

In various configurations, the network 420 can also adapt to congestion scenarios via programmable data planes within the switches 432A-432E that are able to execute data plane programs to implement in-network congestion control algorithms (CCAs) for TCP over Ethernet-based fabrics. Using in-band network telemetry (INT), programmable data planes within the switches 432A-432E can become aware when a port or link along a route is becoming congested and preemptively seek to route packets over alternate paths. For example, switch 432A can load balance traffic to the destination node 442 between link 427A and link 427B based on the level of congestion seen on the routes downstream from those links.

FIG. 4C shows an InfiniBand switch 450, which may be an implementation of the forwarding element 400 of FIG. 4A. The InfiniBand switch 450 includes a programmable data plane and is configurable to perform adaptive routing and telemetry-based congestion control as described herein. The InfiniBand switch 450 includes multi-port IB interfaces 460A-460D and core switch logic 480. The multi-port IB interfaces 460A-460D include multiple ports. In one embodiment, a single instance of a physical interface (IB PHY 453) is present, with input and output buffers associated with a port. In one embodiment, ports have a separate physical interfaces. The ports can couple with, for example, an HCA 452, a TCA 461, or another InfiniBand switch 432. The multi-port IB interfaces 460A-460D can include a crossbar switch 454 that is configured to selectively couple input and output port buffers to local memory 456. The crossbar switch 454 is a non-blocking crossbar switch that provides direct and low latency switching with a fixed or variable packet size.

The local memory 456 includes multiple queues, including an outer receive queue 462, an outer transmit queue 463, an inner receive queue 464, and an inner transmit queue 465. The outer queues are used for data that is received at a given multi-port IB interface that is to be forwarded back out the same multi-port IB interface. The inner queues are used for data that is forwarded out a different multi-port IB interface than used to receive the data. Other types of queue configurations may be implemented in local memory 456. For example, different queues may be present to support multiple traffic classes, either on an individual port basis, shared port basis, or a combination thereof. The multi-port IB interfaces 460A-460D includes power management circuitry 455, which can adjust a power state of circuitry within the respective multi-port IB interface. Additionally power management logic that performs similar operations may be implemented as part of core switch logic.

The multi-port IB interfaces 460A-460D include packet processing and switching logic 458, which is generally used to perform aspects of packet processing and/or switching operations that are performed at the local multi-port level rather than across the IB switch as a whole. Depending on the implementation, the packet processing and switching logic 458 can be configured to perform a subset of the operations of the packet processing and switching logic 478 within the core switch logic 480, or can be configured with the full functionality of the packet processing and switching logic 478 within the core switch logic 480. The processing functionality of the packet processing and switching logic 458 may vary, depending on the complexity of the operations and/or speed the operations are to be performed. For example, the packet processing and switching logic 458 can include processors ranging from microcontrollers to multi-core processors. A variety of types or architectures of multi-core processors may also be used. Additionally, a portion of the packet processing operations may be implemented by embedded hardware logic.

The core switch logic 480 includes a crossbar 482, memory 470, a subnet management agent (SMA 476), and packet processing and switching logic 478. The crossbar 482 is a non-blocking low latency crossbar that interconnects the multi-port IB interfaces 460A-460D and connects with the memory 470. The memory 470 includes receive queues 472 and transmit queues 474. In one embodiment, packets to be switched between the multi-port IB interfaces 460A-460D can be received by the crossbar 482, stored in one of the receive queues 472, processed by the packet processing and switching logic 478, and stored in a transmit queues 474 for transmission to the outbound multi-port IB interface. In implementations that do not use the multi-port IB interfaces 460A-460D, the core switch logic 480 and crossbar 482 switches packets directly between I/O buffers with the receive queues 472 and transmit queues 474 within the memory 470.

The packet processing and switching logic 478 includes programmable functionality and can execute data plane programs via a variety of types or architectures of multi-core processors. The packet processing and switching logic 478 is representative of the applicable circuitry and logic for implementing switching operations, as well as packet processing operations beyond which may be performed at the ports themselves. Processing elements of the packet processing and switching logic 478 executes software and/or firmware instructions configured to implement packet processing and switch operations. Such software and/or firmware may be stored in non-volatile storage on the switch itself. The software may also be downloaded or updated over a network in conjunction with initializing operations of the InfiniBand switch 450.

The SMA 476 is configurable to manage, monitor, and control functionality of the InfiniBand switch 450. The SMA 476 is also an agent of and in communication of the subnet manager (SM) for the subnet associated with the InfiniBand switch 450. The SM is the entity that discovers the devices within the subnet and performs a periodic sweep of the subnet to detect changes to the subnet's topology. One SMA within a subnet can be elected the primary SMA for the subnet and act as the SM. Other SMAs within the subnet will then communicate with that SMA. Alternatively, the SMA 476 can operate with other SMAs in the subnet to act as a distributed SM. In some embodiments, SMA 476 includes or executes on standalone circuitry and logic, such as a microcontroller, single core processor, or multi-core processor. In other embodiments, SMA 476 is implemented via software and/or firmware instructions executed on a processor core or other processing element that is part of a processor or other processing element used to implement packet processing and switching logic 478.

Embodiments are not specifically limited to implementations including multi-port IB interfaces 460A-460D. In one embodiment, ports are associated with their own receive and transmit buffers, with the crossbar 482 being configured to interconnect those buffers with receive queues 472 and transmit queues 474 in the memory 470. Packet processing and switching is then primarily performed by the packet processing and switching logic 478 of the core switch logic 480.

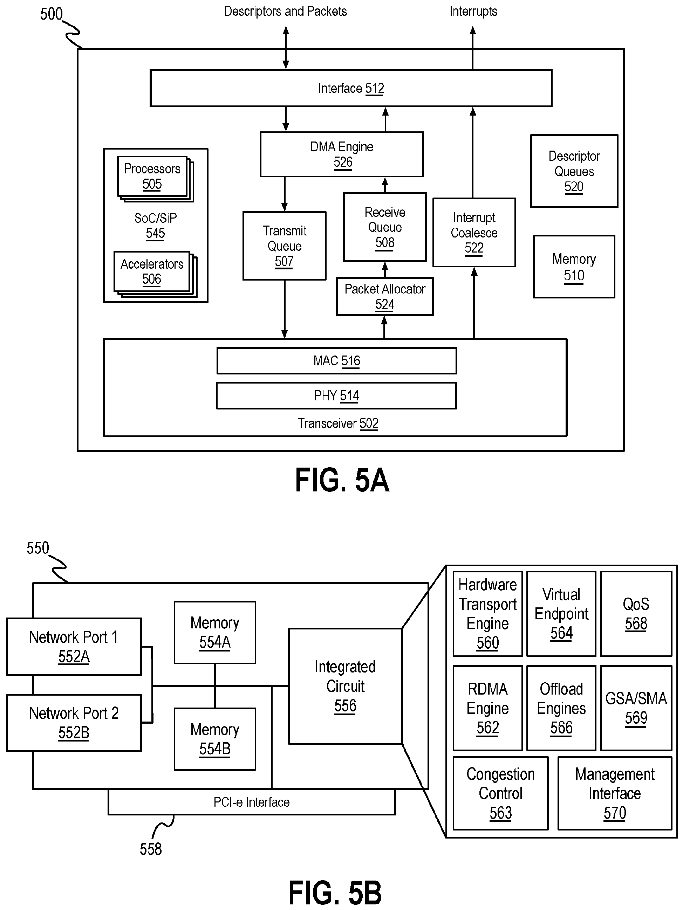

**FIG. 5A-5B** depict example network interface devices. FIG. 5A illustrates a network interface device 500 that may be configured as a smart Ethernet device. FIG. 5B illustrates a network interface device 550 which may be configured as an InfiniBand channel adapter.

As shown in FIG.5A, in one configuration, the network interface device 500 can include a transceiver 502, transmit queue 507, receive queue 508, memory 510, and bus interface 512, and DMA engine 526. The network interface device 500 can also include an SoC/SiP 545, which includes processors 505 to implement smart network interface device functionality, as well as accelerators 506 for various accelerated functionality, such as NVMe-oF or RDMA. The specific makeup of the network interface device 500 depends on the protocol implemented via the network interface device 500.

In various configurations, the network interface device 500 is configurable to interface with networks including but not limited to Ethernet, including Ultra Ethernet. However, the network interface device 500 may also be configured as an InfiniBand or NVLink interface via the modification of various components. For example, the transceiver 502 can be capable of receiving and transmitting packets in conformance with the InfiniBand, Ethernet, or NVLink protocols. Other protocols may also be used. The transceiver 502 can receive and transmit packets from and to a network via a network medium. The transceiver 502 can include PHY circuitry 514 and media access control circuitry (MAC circuitry 516). PHY circuitry 514 can include encoding and decoding circuitry to encode and decode data packets according to applicable physical layer specifications or standards. MAC circuitry 516 can be configured to assemble data to be transmitted into packets, that include destination and source addresses along with network control information and error detection hash values.

The SoC/SiP 545 can include processors that may be any a combination of a CPU processor, graphics processing unit (GPU), field programmable gate array (FPGA), application specific integrated circuit (ASIC), or other programmable hardware device that allow programming of network interface device 500. For example, a smart network interface can provide packet processing capabilities in the network interface using processors 505. Configuration of operation of processors 505, including programmable data plane processors, can be programmed using Programming Protocol-independent Packet Processors (P4), C, Python, Broadcom Network Programming Language (NPL), x86, or ARM compatible executable binaries or other executable binaries.

The packet allocator 524 can provide distribution of received packets for processing by multiple CPUs or cores using timeslot allocation. An interrupt coalesce circuit 522 can perform interrupt moderation in which the interrupt coalesce circuit 522 waits for multiple packets to arrive, or for a time-out to expire, before generating an interrupt to host system to process received packet(s). Receive Segment Coalescing (RSC) can be performed by the network interface device 500 in which portions of incoming packets are combined into segments of a packet. The network interface device 500 can then provide this coalesced packet to an application. A DMA engine 526 can copy a packet header, packet payload, and/or descriptor directly from host memory to the network interface or vice versa, instead of copying the packet to an intermediate buffer at the host and then using another copy operation from the intermediate buffer to the destination buffer. The memory 510 can be any type of volatile or non-volatile memory device and can store any queue or instructions used to program the network interface device 500. The transmit queue 507 can include data or references to data for transmission by network interface. The receive queue 508 can include data or references to data that was received by network interface from a network. The descriptor queues 520 can include descriptors that reference data or packets in transmit queue 507 or receive queue 508. The bus interface 512 can provide an interface with host device. For example, the bus interface 512 can be compatible with PCI Express, although other interconnection standards may be used.

As shown in FIG. 5B, a network interface device 550 can be configured as an implementation of the network interface device 500 to implement an InfiniBand HCA. The network interface device 550 includes network ports 552A-552B, memory 554A-554B, a PCIe interface 558 and an integrated circuit 556 that includes hardware, firmware, and/or software to implement, manage, and/or control HCA functionality. In one implementation, the integrated circuit includes a hardware transport engine 560, an RDMA engine 562, congestion control logic 563, virtual endpoint logic 564, offload engines 566, QoS logic 568, GSA/SMA logic 569, and a management interface. Different implementations of the network interface device 550 may include additional components or may exclude some components. A network interface device 550 configured as a TCA will include some implementation specific subset of the functionality of an HCA. The integrated circuit 556 includes programmable and fixed function hardware to implement the described functionality.

While the illustrated implementation of the network interface device 550 is shown as having a PCIe interface 558, other implementations can use other interfaces. For example, the network interface device 550 may use an Open Compute Project (OCP) mezzanine connector. Additionally, the PCIe interface 558 may also be configured with a multi-host solution that enables multiple compute or storage hosts to couple with the network interface device 550. The PCIe interface 558 may also support technology that enables direct PCIe access to multiple CPU sockets, which eliminates the need for network traffic to traverse the inter-processor bus of a multi-socket server motherboard for a server that includes the network interface device 550.

The network interface device 550 implements endpoint elements of the InfiniBand architecture, which is based around queue pairs and RDMA. InfiniBand off-loads traffic control from software through the use of execution queues (e.g., work queues), which are initiated by a software client and managed in hardware. Communication endpoints includes a queue pair (QP) having a send queue and a receive queue. A QP is a memory-based abstraction where communication is achieved between memory-to-memory transfers between applications or between applications and devices. Communication to QPs occurs through virtual lanes of the network ports 552A-552B, which enable multiple independent data flows to share the same link, with separate buffering and flow control for respective flows.

Communication occurs via channel I/O, in which a virtual channel directly connects two applications that exist in separate address spaces. The hardware transport engine 560 includes hardware logic to perform transport level operations via the QP for an endpoint. The RDMA engine 562 leverages the hardware transport engine 560 to perform RDMA operations between endpoints. The RDMA engine 562 implements RDMA operations in hardware and enables an application to read and write the memory of a remote system without OS kernel intervention or unnecessary data copies by allowing one endpoint of a communication channel to place information directly into the memory of another endpoint. The virtual endpoint logic 564 manages the operation of a virtual endpoint for channel I/O, which is a virtual instance of a QP that will be used by an application. The virtual endpoint logic 564 maps the QPs into the virtual address space of an application associated with a virtual endpoint.

Congestion control logic 563 performs operations to mitigate the occurrence of congestion on a channel. In various implementations, the congestion control logic 563 can perform flow control over a channel to limit congestion at the destination of a data transfer. The congestion control logic 563 can perform link level flow control to manage congestion at source congestion at virtual links of the network ports 552A-552B. In some implementations, the congestion control logic can perform operations to limit congestion at intermediate points (e.g., IB switches) along a channel.

Offload engines 566 enable the offload of network tasks that may otherwise be performed in software to the network interface device 550. The offload engines 566 can support offload of operations including but not limited to offload of receive side scaling from a device driver or stateless network operations, for example, for TCP implementations over InfiniBand, such as TCP/UDP/IP stateless offload or Virtual Extensible Local Area Network (VXLAN) offload. The offload engines 566 can also implement operations of a interrupt coalesce circuit 522 of the network interface device 500 of FIG. 5A. The offload engines 566 can also be configured to support offload of NVME-oF or other storage acceleration operations from a CPU.

The QoS logic 568 can perform QoS operations, including QoS functionality that is inherent within the basic service delivery mechanism of InfiniBand. The QoS logic 568 can also implement enhanced InfiniBand QoS, such as fine grained end-to-end QoS. The QoS logic 568 can implement queuing services and management for prioritizing flows and guaranteeing service levels or bandwidth according to flow priority. For example, the QoS logic 568 can configure virtual lane arbitration for virtual lanes of the network ports 552A-552B according to flow priority. The QoS logic 568 can also operate in concert with the congestion control logic 563.

The GSA/SMA logic 569 implements general services agent (GSA) operations to manage the network interface device 550 and the InfiniBand fabric, as well as performing subnet management agent operations. The GSA operations include device-specific management tasks, such as querying device attributes, configuring device settings, and controlling device behavior. The GSA/SMA logic 569 can also implement SMA operations, including a subset of the operations performed by the SMA 476 of the InfiniBand switch 450 of FIG. 4C. For example, the GSA/SMA logic 569 can handle management requests from the subnet manager, including device reset requests, firmware update requests, or requests to modify configuration parameters.

The management interface 570 provides support for a hardware interface to perform out-of-band management of the network interface device 550, such as an interconnect to a board management controller (BMC) or a hardware debug interface.

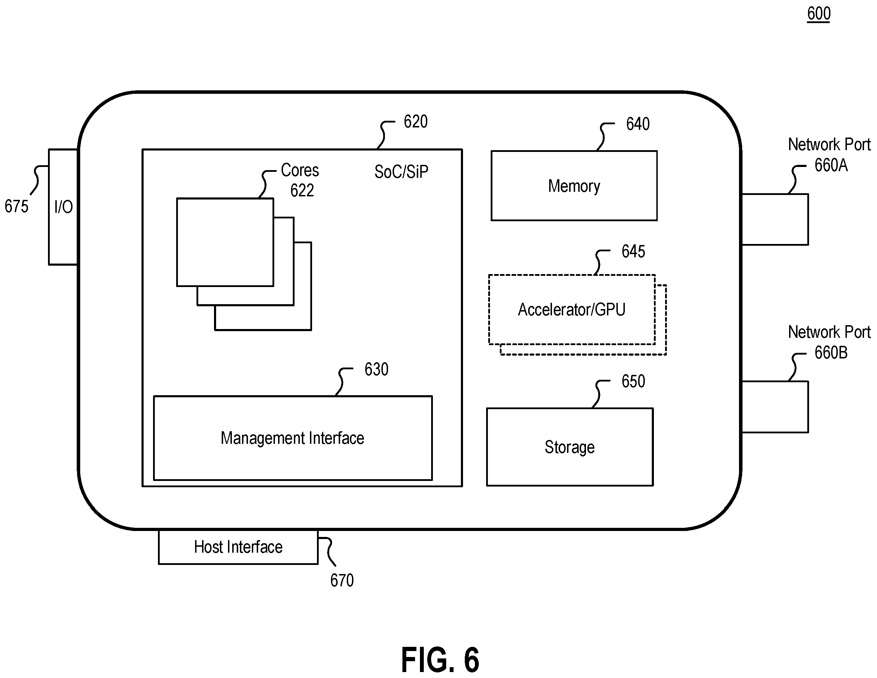

**FIG. 6** is a block diagram illustrating a programmable network interface 600 and data processing unit. The programmable network interface 600 is a programmable network engine that can be used to accelerate network-based compute tasks within a distributed environment. The programmable network interface 600 can couple with a host system via host interface 670. The programmable network interface 600 can be used to accelerate network or storage operations for CPUs or GPUs of the host system. The host system can be, for example, a node of a distributed learning system used to perform distributed training, for example, as shown in FIG. 6. The host system can also be a data center node within a data center.

In one embodiment, access to remote storage containing model data can be accelerated by the programmable network interface 600. For example, the programmable network interface 600 can be configured to present remote storage devices as local storage devices to the host system. The programmable network interface 600 can also accelerate RDMA operations performed between GPUs of the host system with GPUs of remote systems. In one embodiment, the programmable network interface 600 can enable storage functionality such as, but not limited to NVME-oF. The programmable network interface 600 can also accelerate encryption, data integrity, compression, and other operations for remote storage on behalf of the host system, allowing remote storage to approach the latencies of storage devices that are directly attached to the host system.

The programmable network interface 600 can also perform resource allocation and management on behalf of the host system. Storage security operations can be offloaded to the programmable network interface 600 and performed in concert with the allocation and management of remote storage resources. Network-based operations to manage access to the remote storage that would otherwise by performed by a processor of the host system can instead be performed by the programmable network interface 600.

In one embodiment, network and/or data security operations can be offloaded from the host system to the programmable network interface 600. Data center security policies for a data center node can be handled by the programmable network interface 600 instead of the processors of the host system. For example, the programmable network interface 600 can detect and mitigate against an attempted network-based attack (e.g., DDoS) on the host system, preventing the attack from compromising the availability of the host system.

The programmable network interface 600 can include a system on a chip (SoC/SiP 620) that executes an operating system via multiple processor cores 622. The processor cores 622 can include general-purpose processor (e.g., CPU) cores. In one embodiment the processor cores 622 can also include one or more GPU cores. The SoC/SiP 620 can execute instructions stored in a memory device 640. A storage device 650 can store local operating system data. The storage device 650 and memory device 640 can also be used to cache remote data for the host system. Network ports 660A-660B enable a connection to a network or fabric and facilitate network access for the SoC/SiP 620 and, via the host interface 670, for the host system. In one configuration, a first network port 660A can connect to a first forwarding element, while a second network port 660B can connect to a second forwarding element. Alternatively, both network ports 660A-660B can be connected to a single forwarding element using a link aggregation protocol (LAG). The programmable network interface 600 can also include an I/O interface 675, such as a Universal Serial Bus (USB) interface. The I/O interface 675 can be used to couple external devices to the programmable network interface 600 or as a debug interface. The programmable network interface 600 also includes a management interface 630 that enables software on the host device to manage and configure the programmable network interface 600 and/or SoC/SiP 620. In one embodiment the programmable network interface 600 may also include one or more accelerators or GPUs 645 to accept offload of parallel compute tasks from the SoC/SiP 620, host system, or remote systems coupled via the network ports 660A-660B. For example, the programmable network interface 600 can be configured with a graphics processor and participate in general-purpose or graphics compute operations in a datacenter environment.

One or more aspects may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the embodiments described herein.

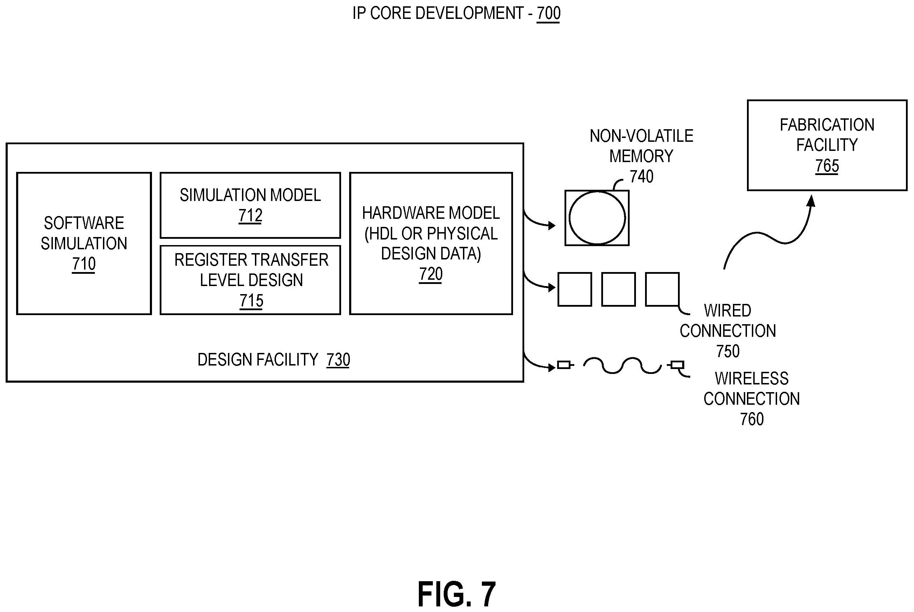

**FIG. 7** is a block diagram illustrating an IP core development system 700. The IP core development system 700 may be used to manufacture an integrated circuit to perform operations of fabric and datacenter components described herein. The IP core development system 700 may be used to generate modular, re-usable designs that can be incorporated into a larger design or used to construct an entire integrated circuit (e.g., an SOC integrated circuit). A design facility 730 can generate a software simulation 710 of an IP core design in a high-level programming language (e.g., C/C++). The software simulation 710 can be used to design, test, and verify the behavior of the IP core using a simulation model 712. The simulation model 712 may include functional, behavioral, and/or timing simulations. A register transfer level design (RTL design 715) can then be created or synthesized from the simulation model 712. The RTL design 715 is an abstraction of the behavior of the integrated circuit that models the flow of digital signals between hardware registers, including the associated logic performed using the modeled digital signals. In addition to an RTL design 715, lower-level designs at the logic level or transistor level may also be created, designed, or synthesized. Thus, the particular details of the initial design and simulation may vary.

The RTL design 715 or equivalent may be further synthesized by the design facility into a hardware model 720, which may be in a hardware description language (HDL), or some other representation of physical design data. The HDL may be further simulated or tested to verify the IP core design. The IP core design can be stored for delivery to a fabrication facility 765 using non-volatile memory 740 (e.g., hard disk, flash memory, or any non-volatile storage medium). The fabrication facility 765 may be a 3^{rd} party fabrication facility. Alternatively, the IP core design may be transmitted (e.g., via the Internet) over a wired connection 750 or wireless connection 760. The fabrication facility 765 may then fabricate an integrated circuit that is based at least in part on the IP core design. The fabricated integrated circuit can be configured to perform operations in accordance with at least one embodiment described herein.

### Autonomous Generation of BKCs for Fleet Management

Fleet management refers to the task of managing electronic device assets within a datacenter or other network environments such as telecom networks or enterprise networks. Fleet management of network assets described herein can facilitated via the use of techniques that enable the autonomous generation of BKCs for the electronic devices and associated software within the datacenter. BKCs are validated configurations that have been confirmed on a specific hardware device or arrangement hardware devices. Without validating a given configuration, fleet managers cannot be certain that a given collection of ingredients will be stable and performant for a specific hardware device or arrangement hardware devices. The autonomous generation of BKCs enable potential configurations to be autonomously identified, validated, and made available for use in production environments. Various applications of these techniques are possible. A datacenter operator can use these techniques to maintain, upgrade, or reconfigure the datacenter network environments. A telecom provider can manage their device fleet within a metro-Ethernet network or in a mobile network. An enterprise company may use these techniques to perform network-wide upgrades, add or remove equipment, and/or reconfigure their network according to changes in power or cost requirements.

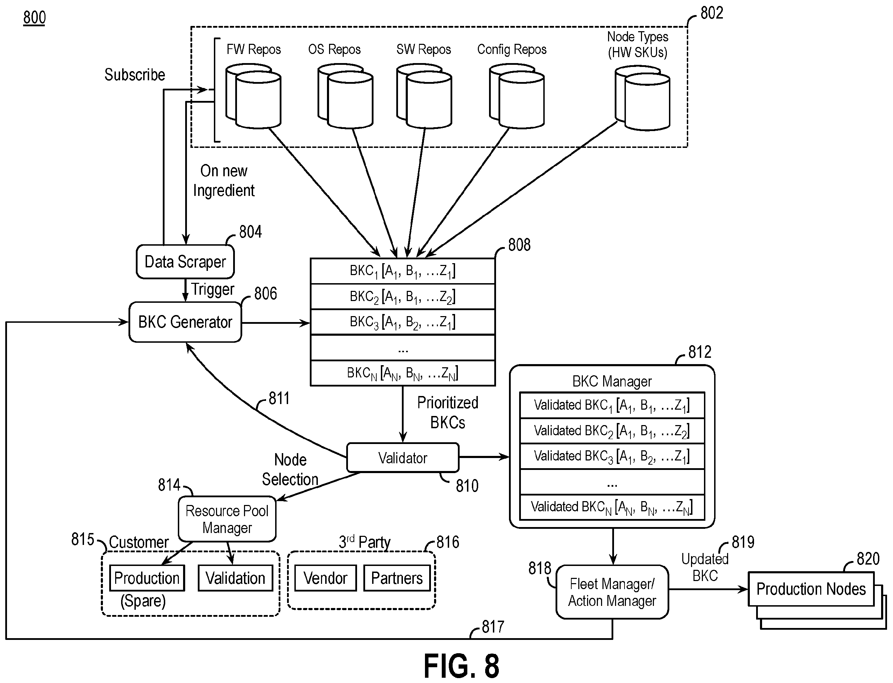

**FIG. 8** illustrates a system 800 to enable large scale BKC generation for fleet management, according to an embodiment. One aspect of autonomous generation of BKCs leverages KB, binary, and source code repositories provided by operating system, low level software vendors, and hardware vendors for their various product offerings. The various vendors will provide KB articles that identify various configs that have been validated by those vendors. These KB articles reside in repositories 802 (e.g., repos), including firmware (FW) repos, OS repos, software (SW) repos, configuration Repos, and node type repos for the various hardware (HW) SKUs for network devices within the network. Occasionally, a new ingredient (e.g., new FW, OS, SW, HW) will be released by a vendor, which will be accompanied by new KB articles related to the new release.

In one embodiment, the mechanism includes a data scraper 804, a BKC generator 806, a BKC validator 810, and a BKC manager 812. The data scraper 804 subscribes to repositories 802 to learn about new releases, including source code or binary repositories though which new ingredients are published or released, and/o gather KB articles, release notes, installation guides, or other documentation related to such new release. The repositories 802 may also include documentation related regulatory compliance and may indicate how a configuration meets a government, financial, or other standard. The documentation in the repositories 802 may also indicate if and how a configuration complies with SLA/SLO requirements or other customer requirements. The data scraper 804 can trigger a call to a BKC generator 806 once a new ingredient is detected. The BKC generator 806 receives information from the data scraper 804 through an API when new ingredients or configurations are released and generates new BKCs. The BKC validator 810 validates those BKCs and the BKC manager 812 manages validated BKCs.

Once the data scraper 804 triggers a call to the BKC generator 806, the BKC generator 806 identifies existing and/or deployed BKCs on the customer fleet of nodes and generate the required BKC combinations. The BKC generator 806 includes prioritization logic to generate a prioritized queue of new BKCs to generate. This BKC queue 808 can be adapted based on predictions of most suitable BKCs and the prioritization can be configurable. In one embodiment, the BKC prioritization process will analyze existing BKCs in production, or desired ingredients selected by an operator, that are affected by the triggers (e.g. a new OS release, FW release, etc.). In one embodiment, the BKC generator 806 includes algorithm driven software logic configured to generate prioritized BKCs based on information gathered by the data scraper 804. In one embodiment, one or more neural network models are trained to assist in the generation of BKCs and/or prioritization of the BKCs.

Additionally, or alternatively depending on how much budget is configured for BKC generation, the BKC generator 806 can trigger the generation of more BKCs, so new combinations can be analyzed. For example, instead of a new OS from the same vendor, an alternative OS can be used, the availability of which is discovered automatically in a vendor catalog or by following operator or enterprise preferences. As a hypothetical example, a customer may discover that using BKCv2 on OS #1 v22.04.05 is slightly slower (e.g., 5% less) than the same BKC using a version of OS #2. Ingredients may have an adaptable importance index so new combinations are only triggered/generated when a certain threshold is reached to avoid testing combinations that may not be useful by customers. The importance Index is adapted based on use, as determined by historic data gathered from production systems at scale. Additionally, the BKC generator 806 can retrieve past permutations that are known to not work across different ingredient FW revisions to avoid repeating the combination in future.

The BKC validator allows the configuration and execution of a set of standard tests, allowing different BKC versions to be compared. Validation may cover areas such as performance, reliability, scalability. To run a test, the BKC validator 810 interacts with a resource pool manager 814 to acquire a list of alternatives that include a set of nodes that can be used for BKC validation. The resource pool manager 814 interacts with a node resource pool, which includes nodes from customer resource pools 815, such as spare resources in customer production environments or customer validation environments. The resource pool manager 814 can also interact with third-party resource pools 816 that provide node resources as a service or ecosystem partners of the vendor. The third-party resource pools 816 provide an ecosystem that enables vendors to provide resources for free, allowing customers to learn more about alternative BKCs, thus generating an offer and demand market. The customer resource pools 815 and third-party resource pools 816 may be used for continuous platform qualification which covers additional system end-to-end tests that could directly benefit customers using the commercial edge node SKUs.

The BKC validator 810 performs a bid between all candidate nodes within the customer resource pools 815 and third-party resource pools 816 that may be used for validation and performs a node selection operation to select a node based on characteristics such as node type, risk, cost, or other characteristics, such as latency. The BKC validator 810 can then access the selected nodes to perform BKC validation. The nodes used for validation may reside in a validation lab, but may also include spare resources within customer or partner fleets, or spare vendor infrastructure. Considering the possibility of performing BKC validation outside of a pure test environment, risk analysis is performed to avoid running validation activities on critical nodes, such as customer production nodes. Risk may be determined based on the modified ingredients. For example, a low risk test may be to test of a new version of an agent within an OS, which is easy to revert to the previous state. However, a high risk test would be one that requires a firmware change on a device, which may be complex to revert to the previous state. Higher risk scenarios may be tested only in a validation environment that is sandboxed from production environments. Upon a successful test, the validation environment may be promoted for use in a production environment.

Validated BKCs are published to the BKC manager 812, which stores and manages validated BKCs. The validated BKCs held by the BKC manager 812 can be queried by the fleet manager (FM 818) (or action manager) platform. The FM 818 can deploy the validated BKCs (e.g., updated BKC 819) to production nodes 820 during maintenance window. In one embodiment, deployment may be performed automatically depending on the level of the system autonomy. In one embodiment, a feedback channel 811 from the BKC validator 810 back to the BKC generator 806 is used to adapt and regenerate BKC configuration profiles. The FM 818 can also have a feedback channel 817 to provide feedback to the BKC generator 806 enable in-field learnings to be incorporated into a future BKC release. This feedback may be implemented as an autonomous self-learning system.

Configuration profiles are initially set by operators to define the node intended use. After deployment, it is possible to autonomously identify better profiles for the nodes using AI, for example, via non-supervised methods using clustering. At scale, the FM 818 enables the identification of better fitted profiles for the nodes considering all of the knowledge gathered by monitoring the full fleet. The FM 818 can automatically verify the theoretical assumptions and identify factors or combinations that are crucial for the performance that have not previously been identified.

In addition to the new components mentioned above, the system can also keep a mapping to higher level software components or CaaS (containers as a service) that are dependent upon or can benefit from new platform functions, such as a container orchestration system clusters and their dependencies. The system may also include one or more warehouse computers, which are groups of equipment inside the data center that is a subset of the data center.

Once new ingredients or configurations trigger the generation of BKCs, a mechanism is needed to keep the KB provided by a hardware or software vendor up to date with the latest BKCs. One of the capabilities of the LLMs is content generation, which in this context, is employed for content maintenance. The LLM content generation is used to adapt articles as systems evolve with new ingredient versions, configurations, and topologies.

New content data is obtained with the data scraper 804 from ingredient providers' repos/wikis/etc., while inclusion of new ingredient and collateral from user input is also a valid option, for instance, by adding a new OS as an option for a specific type of node (this can also be derived from node execution, either user-initiated or automated). To update the articles, a retrieval augmented generation (RAG) architecture is used, which allows the use of the existing KB in combination with an LLM that is trained to perform article updates.

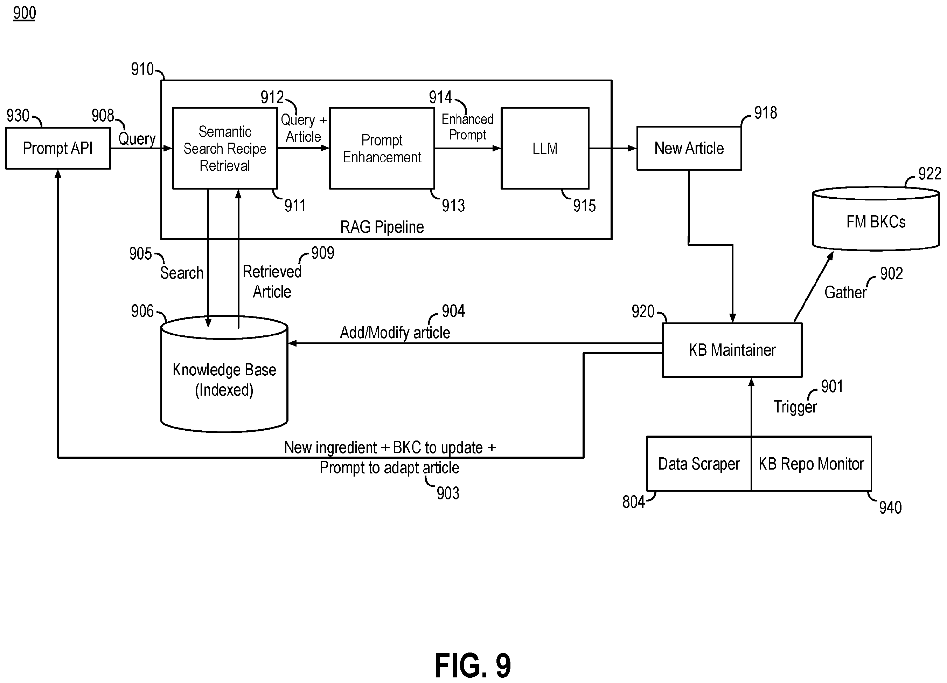

**FIG. 9** illustrates a system 900 to autonomously generate knowledge base article updates based on generated BKCs. The system includes a RAG pipeline 910, a KB maintainer 920, and a prompt API 930. The RAG pipeline 910 includes semantic search recipe retrieval logic 911, prompt enhancement logic 913, and an LLM 915 or another machine learning model. The RAG pipeline 910 is configured to generate a new KB article 918 based on a query 908 received via the prompt API 930 and using the LLM 915 or (another machine learning model). New article generation can be triggered by the KB maintainer 920 in response to receipt of a trigger 901 and new data from the data scraper 804 and/or a KB repo monitor 940 that is configured to monitor KB repos for new information. After receipt of the trigger 901, the KB maintainer 920 can gather 902 information on existing BKCs from the fleet management platform (FM BKCs 922) and aggregate the information to produce input to submit to the prompt API 930, which is the input interface to the RAG pipeline 910.

The KB maintainer 920 generates a data package 903 including a prompt requesting the adaptation of an existing article, as well as the context (BKC to update, new ingredient, any other info provided by the data scraper) to use to perform the adaptation. The prompt API 930 supports prompts including but not limited to text, voice, image, program code, scripting language, or computer generated data. The RAG pipeline 910 will apply a semantic search recipe retrieval algorithm via semantic search recipe retrieval logic 911 to search 905 an indexed knowledge base 906 associated with the ingredient provider for the ingredient or ingredients that are the subject of the updated BKC. The search 905 will return a retrieved article 909, which is the most probable article to be updated (if any) and will be modified to create the new article. The RAG pipeline 910 will then provide a package 912 including the retrieved article 909 and the initial query to prompt enhancement logic 913, which generates an enhanced prompt 914. The enhanced prompt 914 includes additional context that has been determined for the query, which can be determined based on the retrieved article 909. The enhanced prompt 914, which includes the initial query, the context associated with the query, and the original article to modify (e.g., retrieved article 909), is then provided to the LLM 915. The LLM 915 is trained to generate a new KB article 918 based on the input provided by the enhanced prompt 914. In one embodiment, the new KB article 918 is based on the retrieved article 909, with updates based on the information provided by the new BKC. The KB maintainer 920 can add 904 the new KB article 918 to the indexed knowledge base 906 as a new version of the retrieved article 909. Both the new version and the old version will be available in the indexed knowledge base 906.

The RAG pipeline 910 can enable the update of existing articles or the addition of new articles. The RAG pipeline 910 can also perform additional operations, such as generating a risk coefficient based on the delta from the original to updated article, which can be optionally analyzed by an operator. These techniques may be used to dramatically reduce the operating expenses required by ingredient suppliers in providing ingredient support.

For example, a network can include a node (Node 1) that is characterized by details shown in **Table 1.**

**Table 1 - Node 1 Characteristics**

| **Vendor** | **SKU** | **CPU** | **Memory** | **Interface Type** | **Interface SKU** |
|---|---|---|---|---|---|
| Vendor #1 | r750 | 4^{th} Gen Enterprise | 512GB | IPU | E2100-CCQDA2 |

A BKC for this node can be determined as shown in **Table 2.**

**Table 2 - Node 1 BKC**

| **Node** | **Version** | **BIOS** | **OS** | **OS Version** | **Interface FW** |
|---|---|---|---|---|---|
| 1 | v1 | v1.33 | OS #1 | 20.04.02 | v1.28 |

A trigger can occur for the system 900 in which the OS vendor or maintainer releases an urgent OS update (version 20.04.05) with a critical security patch, along with accompanying release notes and KB articles with collateral required for troubleshooting. Once the situation is identified, a trigger to the BKC generation process is started. In this case the currently used BKC version is identified (i.e., BKC v1) for the node types being affected (in this case Node 1) and ingredients are gathered to form the new BKC. As soon as a resource of type Node1 is made available, the tests for this BKC version are run and the result is compared with the previous baseline. Additionally, existing KB articles related to the previous version are identified and updated using the information provided by the ingredient provider. This is done using an LLM, which receives the original article, the new information from the new ingredient (by the ingredient provider), and then updating the outcome in the Knowledge Base (keeping the old and new version available). Also, the KB article content (such as a recipe) have to be automatically tested on spare resources (or approved by an operator) before getting confirmed as official KB articles. The above node and BKC characteristic are exemplary and are not limiting as to all embodiments. Additional characteristics for nodes and BKCs may also be used. For example, the BKC may additionally list ingredients within a software stack that executes on the host and/or IPU, such as frameworks or daemons, and the like, including the respective versions of those ingredients.

This process results in the generation of a new validated BKC, as shown in Table 3.

**Table 3 - Updated Node BKC**

| **Node** | **Version** | **BIOS** | **OS** | **OS Version** | **Interface FW** |
|---|---|---|---|---|---|
| 1 | v2 | v1.33 | OS #1 | 20.04.05 | v1.28 |

In addition to the regular subscription to get this data from the ingredients provider, the data scraper is employed to continuously analyze logs to identify discrepancies between the KB database and the actual production state. If users are manually testing a certain software version and logs indicate no errors and potentially good performance, the scraper can suggest an update to the relevant KB articles.

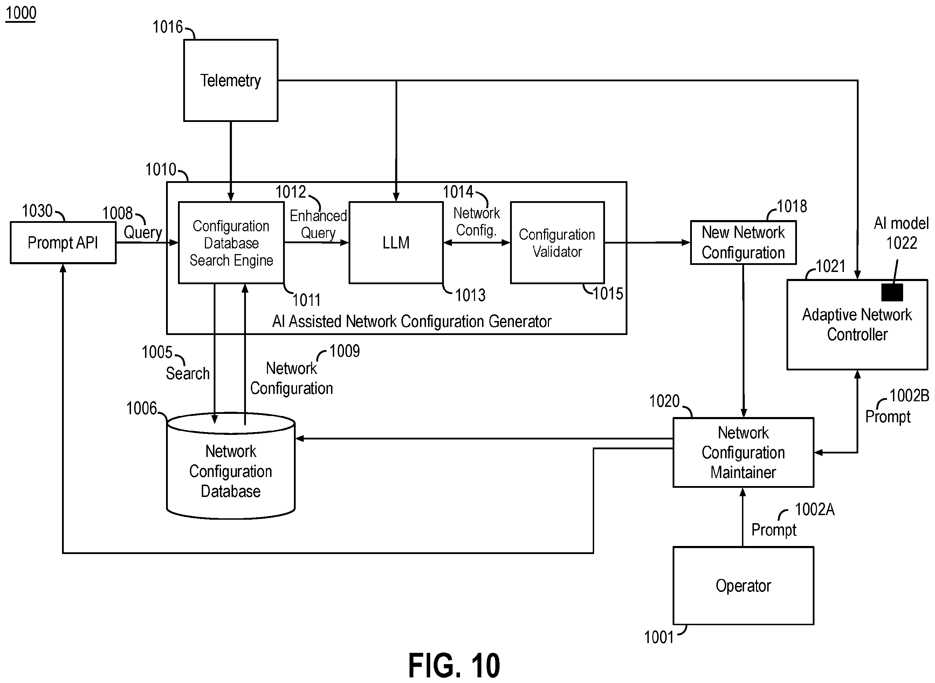

**FIG. 10** illustrates a system 1000 to enable AI-defined networking (ADN) configurations, according to an embodiment. The system 1000 uses AI models to at least partially automate the management of a networking system. The system 1000 includes an AI assisted network configuration generator 1010 that is configured to generate a new network configuration 1018 for a software defined network based on a query 1008 and a snapshot of live telemetry 1016 that represents the current state of the network or the state of the network at a specified time. The new network configuration 1018 can then be added to a network configuration database 1006 and then selected for deployment to a software defined network via an SDN controller such as an orchestrator 360 as in FIG. 3. The network configuration maintainer 1020 communicates with an adaptive network controller 1021, which in one embodiment is configured to adjust the network configuration based on live telemetry 1016. The adaptive network controller 1021 can request that the network configuration maintainer 1020 to select a new network configuration from the network configuration database 1006 based on a change in network conditions, as determined via the live telemetry 1016. The live telemetry 1016 can include, for example, device, port, or traffic statistics for the network.

An operator 1001, such as a network engineer, can submit a prompt 1002A to the network configuration maintainer 1020, which in one embodiment is a software module that maintains a network configuration database 1006. The network configuration maintainer 1020, in various embodiments, can execute on a host, an SDN controller, or one or more IPUs or DPU within a network. The network configuration database 1006 includes the current network configuration, past network configurations, and potential network configurations. The network configuration database 1006 can be stored at any suitable storage location accessible to the network configuration maintainer 1020. The network configurations include a variety of software defined networking configurations associated with a software defined network architecture. In one embodiment, the network configurations can be implemented via an SDN controller, which is under the control of the network configuration maintainer 1020 and the operator 1001, via prompt-defined networking. An operator 1001 can submit a prompt 1002A to the network configuration maintainer 1020 to request the generation of the new network configuration 1018. The prompt 1002A can be a request to add or remove a node to the network or apply change to the current SDN configuration, such as making an adjustment to the network topology or forwarding rules. Based on the prompt 1002A from the operator 1001, the network configuration maintainer can submit a query 1008 via a prompt API 1030 to the AI assisted network configuration generator 1010. The prompt API 1030 can be the prompt API 930 of the system 900 of FIG. 9 or a different prompt API that is tailored specifically for the AI assisted network configuration generator 1010.

In one embodiment, the AI assisted network configuration generator 1010 includes a configuration database search engine 1011, an LLM 1013, and a configuration validator 1015. The configuration database search engine 1011 can search 1005 the network configuration database 1006 to find a current, past, or potential network configuration that is close to the configuration requested by the query 1008. The search 1005 performed by the configuration database search engine 1011 can include a snapshot of live telemetry 1016 to provide context to the search, in the event that the operator 1001 wishes to define or adjust a configuration to address a condition that is reflected in the live telemetry 1016. An enhanced query 1012 can then be generated based on one or more network configurations (network configuration 1009) retrieved from the network configuration database 1006 and a snapshot of live telemetry 1016. The enhanced query 1012 can then be submitted to the LLM 1013, which is trained to generate a network configuration 1014, which may be a new or adapted network configuration. The LLM 1013 is trained to understand the meaning of network configurations of the type stored on the network configuration database 1006. The LLM 1013 can adjust those configurations based on the enhanced query 1012. The LLM 1013 can also generate a new configuration instead of adjusting an older configuration if the new configuration is more consistent with the parameters of the query 1008.

In one embodiment, the LLM 1013 can also use a snapshot of live telemetry 1016 as context when generating the network configuration 1014 or adjusting an older configuration. The LLM 1013 can be a text-based model that understands network configurations that are defined using a text description. The LLM 1013 may also include a visual component that is configured to understand an image-based network diagram or other network configurations that are defined in part using images. For example, in one embodiment network configurations are defined as an annotated diagram in which specific visual components (e.g., icons) representing network interfaces and network infrastructure devices (e.g., switches, routers), while other visual components (e.g., lines, arrows) represent connections between those network devices. A text-based component of the network configuration can define settings or parameters for the network interfaces and network infrastructure devices.

The LLM 1013 can output a network configuration 1014, which then validated via a configuration validator 1015. The configuration validator 1015 can determine whether the generated network configuration is a plausible configuration that can be safely applied to the network. In one embodiment, the configuration validator 1015 maintains a digital twin of the network. The digital twin represents the layout of the datacenter's network infrastructure, including routers, switches, firewalls, and other devices. The configuration validator can simulate traffic patterns and flows via the digital twin to estimate the outcome of implementing the network configuration that is generated by the LLM 1013. In one embodiment, the configuration validator 1015 can communicate with the BKC validator 810 of FIG. 8 to determine if the network configuration 1014 is consistent with known BKCs. The configuration validator 1015 can determine that the network configuration 1014 can be validly applied to the network or can provide feedback to the LLM 1013 to adjust an aspect of the network configuration. Once a valid configuration is generated, the configuration validator 1015 can output a new network configuration 1018, which is consumed by the network configuration maintainer 1020 and added to the network configuration database 1006.

In one embodiment, the operator 1001 can submit a prompt 1002A to the network configuration maintainer to apply the new network configuration after the new network configuration is generated. In one embodiment, the adaptive network controller 1021 can request the network configuration maintainer 1020 to apply the new network configuration 1018 in response to the occurrence of some condition, as detected via the live telemetry 1016.

As an example, the operator 1001 can submit a prompt 1002A to the network configuration maintainer 1020 to generate an ADN configuration to add a enable a new network switch and configure a LAG protocol for the switch. The AI assisted network configuration generator 1010 will perform a search 1005 to retrieve a network configuration 1009, which may be the current or most relevant configuration, and adjust the configuration to define parameters for the new switch. The LLM 1013 may select the LAG protocol adaptively based on the type of traffic that will be handled by the new switch, as determined by the live telemetry 1016. The network configuration 1014 generated by the LLM 1013 is validated by the configuration validator 1015 and added to the network configuration database 1006 by the network configuration maintainer 1020. The operator 1001 can prompt the network configuration maintainer to apply the new network configuration 1018 or can pre-authorize the network configuration maintainer to automatically apply the new network configuration 1018 when the configuration is ready. Alternatively, the adaptive network controller 1021 can request that the network configuration maintainer 1020 enable the new network configuration 1018 at some future time or based on a telemetry-based trigger.

In one embodiment, the adaptive network controller 1021 includes an AI model 1022 that is trained to adaptively adjust network configurations based on live telemetry 1016. The AI model 1022 can include one or more neural network models having a variety of model architectures. The AI model 1022 within the adaptive network controller 1021 is trained to receive the live telemetry 1016, perform real-time analysis of device, port, or traffic statistics, and dynamically adjust the network configuration via the network configuration maintainer 1020 using predefined prompts or rules, which can be submitted to the network configuration maintainer for processing via the AI assisted network configuration generator. The AI model 1022 additionally enables the adaptive network controller 1021 to learn from the live telemetry 1016, as well as logging data, and improve its performance over time.

For example, the adaptive network controller 1021 can optimize routing and load balancing decisions based on actual network behavior, rather than relying solely on pre-defined rules or static configurations. The adaptive network controller 1021, via the AI model 1022 or via the AI assisted network configuration generator 1010, can perform actions such as managing, starting, or stopping network functions to applying adaptive routing techniques to adapt to congestion that is detected via the live telemetry. An example use case is using the adaptive network controller 1021 to optimize mice and elephant traffic flows within a datacenter. Mice flows refer to small, frequent transfers of data between devices or applications, such as file transfers or database queries. These flows typically consume low amounts of bandwidth but generate high volumes of packets. Elephant flows are large and infrequent transfers of data, often involving massive files or datasets being transferred across the network. Examples include video streaming, software updates, or backups. Elephant flows can consume significant amounts of bandwidth for extended periods, causing congestion and impacting overall network performance.

In a datacenter environment, mice flows can cause packet collisions and increased latency due to the high volume of packets, may lead to buffer overflows in switches and routers, resulting in dropped packets or retransmissions, and require efficient routing and switching mechanisms to handle the large number of small packets. Elephant flows can consume significant amounts of bandwidth, causing congestion and reducing available resources for other traffic, may require specialized handling by network devices, such as Quality of Service (QoS) policies or traffic shaping techniques, and can impact overall datacenter performance if not properly managed, leading to reduced application availability and user experience.

The adaptive network controller 1021 can be configured to mitigate the effects of mice and elephant flows in a datacenter by adaptively enabling network features or adaptively adjusting the network configuration. For example the adaptive network controller 1021 can implement QoS policies to prioritize critical applications and limit bandwidth consumption by non-essential traffic, use traffic shaping techniques to regulate large file transfers and prevent congestion, optimize network device configurations for efficient handling of small packets (mice) and high-bandwidth flows (elephants), while monitoring network performance to identify bottlenecks and further optimize resource allocation. For example, a load-balancing technique can be applied for elephant flows that performs elephant flow detection and enables multipath routing for those flows to improve the throughput and overall utilization of the network.

In one embodiment, the adaptive network controller 1021 is configured to dynamically adapt the network in anticipation of contemplation of the large scale execution of a compute workload. In such embodiment, the AI model 1022 of the adaptive network controller 1021 is trained to perform AI-based fleet management of a fleet of networking equipment. For example, the adaptive network controller 1021 can use prompt-based network management to set up a warehouse computer to execute a compute workload. Datacenters may use a warehouse computer to handle large amounts of structured and unstructured data from various sources, such as social media platforms, IoT devices, or databases. The warehouse computer is configured to store, process, and analyze large datasets in real-time, and typically consists of multiple nodes or servers that work together to distribute the workload.

In one embodiment, the adaptive network controller 1021 is configurable to submit a prompt 1002B to the network configuration maintainer 1020 to carve out a portion of the datacenter to implement the distributed compute environment for the warehouse computer in anticipation of an incoming workflow. The dataflow within the distributed computing environment for the warehouse computer may be based on RDMA and RoCE, and the servers selected for the warehouse computer should have network interfaces with the capability of accelerate data transfers for that dataflow. The adaptive network controller 1021 can request the network configuration manager to define distributed compute environment that occupies a rack, spine, super-rack, etc. of the datacenter based on the compute needs of the warehouse computer. The network configuration can then be generated to configure the fleet of networking equipment accordingly. The adaptive network controller 1021 may also collapse the distributed compute environment and reallocate those resources when that specific distributed compute demand is no longer present.

In one embodiment the adaptive network controller 1021 can work in concert with the digital twin of the configuration validator 1015 to perform predictive maintenance of a generated network configuration. For example, if the digital twin shows issues with current, past, or upcoming traffic patterns, the digital twin can dynamically notify administrators and/or set off alarms. Depending on the configured levels of autonomy, the digital twin and/or adaptive network controller 1021 may autonomously adjust network configuration details applied to the fleet, network equipment, warehouse computer, etc., associated with the network configuration, throttle traffic, or apply traffic shaping techniques. Similarly, the digital twin may be used to determine when portions of the fleet or a warehouse computer can be placed into a sleep mode to save power.

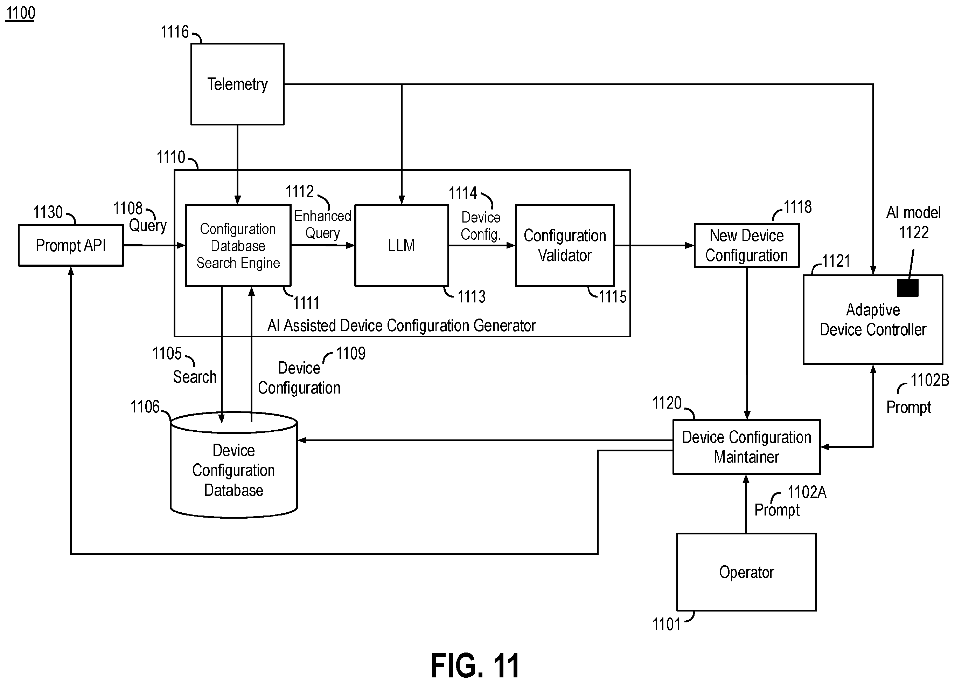

**FIG. 11** illustrates a system 1100 to enable AI defined device configurations, according to an embodiment. The system 1100 can operate similarly to the system 1000 of FIG. 10 that enables ADN configurations, except with an adaptive device controller 1121 that operates at the device level instead of at the network level. The system 1100 is an AI-based system that may be implemented on an IPU or DPU, such as the network interface devices of FIG. 5A-5B and FIG. 6. The system 1100 is designed to analyze telemetry 1116, which may be live and/or real-time telemetry data harvested from various protocol engines such as LAN and RDMA. Dedicated processor cores of the programmable network interface are configured to continuously process the telemetry 1116 to identify patterns and anomalies that can inform proactive decisions for device resource, bandwidth, and power management. The system 1100 integrates with various protocol engines (LAN, RDMA, etc.) to collect relevant data on device performance, bandwidth utilization, and power consumption. The AI model 1122 of the adaptive device controller 1121 can identify unusual patterns in the telemetry 1116 that may indicate potential issues or inefficiencies in device operation. The AI model 1122 can include one or more neural network models having a variety of model architectures. Based on the insights gained from analyzing the telemetry 1116, the system provides hints for optimizing resource allocation (e.g., processor, memory), bandwidth utilization, and power management to ensure efficient device performance. The system 1100 can be used to dynamically manage device resources, reduce energy waste, and improve overall efficiency.

In one embodiment, the system 1100 performs prompt-based device management based on a prompt from an operator 1101 or from the adaptive device controller 1121. The system 1100 includes an AI assisted device configuration generator 1110 that is configured to generate a new device configuration 1118 for a programmable network interface device based on a query 1108 and a snapshot of telemetry 1116 representing the current state of the devices. This new device configuration 1118 can then be added to a device configuration database 1106, which stores multiple possible device configurations, including past, present, and potential configurations. In one embodiment, the device configuration maintainer 1120 communicates with an adaptive device controller 1121, which is configured to adjust the current device configuration in real-time based on live telemetry. The adaptive device controller can request that the device configuration maintainer 1120 select a new device configuration from the device configuration database 1106 based on a change in device conditions, as determined via the telemetry 1116.

An operator 1101 can submit a prompt 1102A to a device configuration maintainer 1120, which maintains the device configuration database 1106. The prompt 1102A can be a request to enable a pre-defined configuration or to apply a modification to a pre-defined configuration, such as enabling or disabling ports on the device, enabling or disabling a data plane program on the device, or adjusting the forwarding rules defined for the device. Based on an operator's prompt, the device configuration maintainer 1120 submits a query via a prompt API 1130 to the AI assisted device configuration generator 1110. The prompt API 1130 can be the prompt API 930 of the system 900 of FIG. 9, the prompt API 1030 of FIG. 10, or a different prompt API that is tailored specifically for the AI assisted device configuration generator 1110.

In one embodiment, the AI assisted device configuration generator 1110 includes a configuration database search engine 1111, an LLM 1113, and a configuration validator 1115. The configuration database search engine 1111 can search 1105 the device configuration database 1106 to find a current, past, or potential device configuration that is close to the configuration requested by the query 1108. The search 1105 performed by the configuration database search engine 1111 can include a snapshot of the telemetry 1116 to provide context to the search 1105, in the event that the operator 1101 wishes to define or adjust a configuration to address a condition that is reflected in the telemetry 1116. An enhanced query 1112 can then be generated based on one or more device configurations retrieved from the device configuration database. The enhanced query 1112 can then be submitted to the LLM 1113, which is trained to generate new or adapted device configurations. The LLM 1113 is trained to understand the meaning of device configurations of the type stored on the device configuration database. The LLM 1113 can adjust those configurations based on the enhanced query 1112. The LLM 1113 can also generate a new configuration instead of adjusting an older configuration if the new configuration is more consistent with the parameters of the query.

In one embodiment, the LLM 1113 can also use a snapshot of telemetry 1116 as context when generating the device configuration or adjusting an older configuration. The LLM 1113 can be a text-based LLM that understands device configurations defined using a text description. The LLM 1113 may also include a visual component that allows it to understand device configurations defined in part using images, such as an image-based diagram of a device's internal components.

The LLM 1113 can output a device configuration 1114, which is then validated via the configuration validator 1115. In one embodiment, the configuration validator 1115 communicates with the BKC validator 810 of FIG. 8 to determine if the device configuration 1114 is consistent with known BKCs. Once a valid configuration is generated, the configuration validator 1115 outputs a new device configuration 1118, which is consumed by the device configuration maintainer and added to the device configuration database. The operator can prompt the device configuration maintainer 1120 to apply the new device configuration or the adaptive device controller 1121 can request the device configuration maintainer 1120 to apply the new device configuration 1118 in response to the occurrence of some condition, as detected via the telemetry 1116.

While the use of LLMs (e.g., LLM 915, LLM 1013, LLM 1113) are described generally herein, embodiments are not limited specifically to LLMs and other neural network models may be used in place of various components. Multiple types of models may be employed, which may include LLMs, and may also include small language models (SLM) in implementations in which only certain words are be required to configure the network. In one embodiment, the LLMs described herein are replaced by an AI model or neural network architecture that is designed from the ground up for BKC generation, KB generation and augmentation, network management, fleet management, or device management. One or more guardrails may be applied to the model to limit the tasks that the model can perform. As described herein, in one embodiment, at least some of the employed models include image or visual capabilities that allow an image to be provided as input and the model will update the networked devices according to the supplied image.

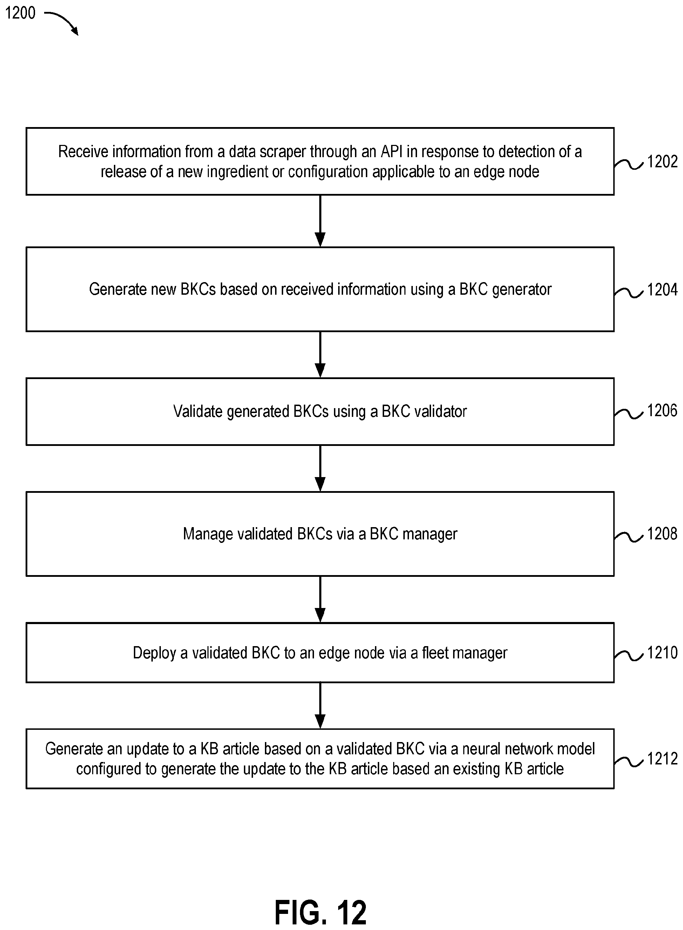

**FIG. 12** illustrates a method 1200 to enable the autonomous generation of best known configurations, according to an embodiment. The method 1200 can be implemented via systems described herein, such as but not limited to the systems of FIG. 9-11. In one embodiment, the method 1200 includes for a system to receive information from a data scraper through an API in response to detection of a release of a new ingredient or configuration applicable to an edge node (1202). The system can then generate new configurations (e.g., BKCs) based on received information using a BKC generator (1204). The system can then validate generated BKCs using a BKC validator (1206). The BKC validator can output validated BKCs. The system can then manage validated BKCs vis a BKC manager (1208). The system can then deploy a validated KBC to an edge node via a fleet manager (1210). Subsequently, the system can generate an update to a KB article based on a validated BKC via a neural network model configured to generate the update to the KB article based an existing KB article (1212).

Described herein are technique to enable the autonomous generation of best known configurations for a network environment, including but not limited to an edge network of a datacenter. Additional embodiments include prompt-based generation of network and device configurations and neural network based systems for adaptive network management.

One embodiment provides a data processing system comprising memory to store instructions and one or more processors configured to execute the instructions, the instructions to provide a system to generate and validate best known configurations (BKCs) for edge nodes. While edge nodes are primarily described herein due to the complexity of the edge network of a datacenter, these techniques are also applicable to datacenter and enterprise networks and their associated nodes. The techniques described herein may be applied, for example within a cloud service provider (CSP), or another datacenter, which may be, by way of nonlimiting example, a traditional enterprise datacenter, an enterprise "private cloud," or a "public cloud," providing services such as infrastructure as a service (IaaS), platform as a service (PaaS), or software as a service (SaaS).

The system comprises a data scraper configured to subscribe to a repository to retrieve information related to a release of a new ingredient for a node, the new ingredient including at least one of software, firmware, operating system, and hardware, a BKC generator configured to receive information from the data scraper via an application programming interface (API) in response to the release of the new ingredient and generate a new BKC based on the information received from the data scraper, a BKC validator configured to validate the new BKC, and a BKC manager configured to manage validated BKCs to be deployed to the nodes.

In one embodiment, a resource pool manager is configured to interact with a node resource pool and acquire a set of nodes for BKC validation. The BKC validator interacts with the resource pool manager to validate the new BKC. The node resource pool includes nodes from at least one of a customer production environments, customer validation environments, and third-party environments provided as a service from a vendor or an ecosystem partner of the vendor. The BKC validator and the BKC generator are configured to establish a feedback channel to adapt and regenerate a BKC. The system includes a fleet manager (FM) to deploy a validated BKC to the nodes. The FM is configured to deploy the validated BKC to the nodes automatically based on a configurable level of system autonomy.

In one embodiment, the BKC generator is configured to generate a prioritized queue of BKCs to generate and the BKC validator is configured to validate BKCs within the prioritized queue of BKCs according to a BKC priority. The system comprises KB update logic to generate an update to a KB article based on a validated BKC. The KB update logic includes a neural network model configured to generate the update to the KB article based an existing KB article.

One embodiment provides a method for generating and validating configurations (e.g., BKCs) for nodes, comprising receiving information from a data scraper through an API in response to detection of a release of a new ingredient or configuration applicable to a node, the new ingredient including at least one of software, firmware, operating system, and hardware, generating new BKCs based on received information using a BKC generator, validating generated BKCs using a BKC validator, and managing validated BKCs in a BKC manager, the validated BKCs to be deployed to the nodes. The method additionally includes acquiring, by the BKC validator, a set of nodes for BKC validation from a node resource pool via a resource pool manager. The node resource pool includes nodes from at least one of customer production environments, customer validation environments, and third-party environments provided as a service from a vendor or an ecosystem partner of the vendor. The method additionally includes establishing a feedback channel between the BKC validator and the BKC generator to adapt and regenerate a BKC. In one embodiment, the system can deploy a validated BKC to the nodes via a fleet manager (FM). The FM can deploy the validated BKC via the FM to the nodes automatically based on a configurable level of system autonomy. The system can generate an update to a KB article based on a validated BKC via a neural network model configured to generate the update to the KB article based an existing KB article.

One embodiment provides a non-transitory machine-readable medium having instructions stored thereon, the instructions, when executed, cause one or more processors to perform operations comprising receiving a prompt at a network configuration maintainer to generate a network configuration for a network of a datacenter, searching a network configuration database based on the prompt to retrieve a network configuration, generating an enhanced query based on the prompt and the network configuration, processing the enhanced query via a neural network model to generate a new network configuration, validating the new network configuration via a network configuration validator, the network configuration validator including a digital twin of the network, and adding the new network configuration to the network configuration database after validation of the new network configuration. In one embodiment, the operations comprise autonomously selecting a network configuration from the network configuration database based on live telemetry received for the network.

One embodiment provides a network interface device comprising memory to store instructions and one or more processors coupled with the memory to execute the instructions. The instructions cause the one or more processors to receive a prompt at a device configuration maintainer to generate a device configuration for the network interface device, searching a device configuration database based on the prompt to retrieve a device configuration, generating an enhanced query based on the prompt and the device configuration, processing the enhanced query via a neural network model to generate a new device configuration, validating the new device configuration via a device configuration validator, and adding the new device configuration to the device configuration database after validation of the new device configuration. In one embodiment, the one or more processors are configured to autonomously select a device configuration from the device configuration database based on live telemetry received from a protocol engine associated with the network interface device.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device). This machine-readable storage medium may have instructions stored thereon, which when executed cause one or more processors to perform operations described herein.

In the drawings, some structural or method features may be shown in specific arrangements and/or orderings. However, it should be appreciated that such specific arrangements and/or orderings may not be required. In some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

The following section of the description relates to further examples. The numbered paragraphs in this section are not claims. The claims are set forth below in the later section headed "claims".
1. A data processing system comprising: memory to store instructions; and one or more processors configured to execute the instructions, the instructions to provide a system to generate and validate configurations for nodes, the system comprising: first instructions configured to retrieve information related to a release of a new ingredient for a node, the new ingredient including at least one of software, firmware, operating system, and/or hardware; second instructions configured to receive information from the first instructions in response to the release of the new ingredient and generate a new configuration based on the information received from the first instructions; third instructions configured to validate the new configuration; and fourth instructions configured to manage validated configurations to be deployed to the nodes.
2. The data processing system of clause 1, the system further comprising: a fifth instructions configured to interact with a node resource pool and acquire a set of nodes for configuration validation, wherein the third instructions interact with the fifth instructions to validate the new configuration.
3. The data processing system of clause 2, wherein the node resource pool includes nodes from at least one of a customer production environments, customer validation environments, and/or third-party environments provided as a service from a vendor or an ecosystem partner of the vendor.
4. The data processing system of clause 1, wherein the third instructions and the second instructions are configured to establish a feedback channel to adapt and regenerate a configuration.
5. The data processing system of clause 4, the system comprising sixth instructions to deploy a validated configuration to the nodes.
6. The data processing system of clause 5, wherein sixth instructions are configured to deploy the validated configuration to the nodes automatically based on a configurable level of system autonomy.
7. The data processing system of clause 1, wherein the second instructions are configured to generate a prioritized queue of configurations to generate and the third instructions are configured to validate configurations within the prioritized queue of configurations according to a configuration priority.
8. The data processing system of clause 1, the system comprising seventh instructions to generate an update to a knowledge base article based on a validated configuration.
9. The data processing system of clause 8, the seventh instructions including or associated with a neural network model configured to generate the update to the knowledge base article based an existing knowledge base article.
10. A method for generating and validating configurations for nodes, comprising: receiving information in response to detection of a release of a new ingredient or configuration applicable to a node, the new ingredient including at least one of software, firmware, operating system, and/or hardware; generating new configurations based on received information; validating generated configurations; and deploying validated configurations to the nodes.
11. The method of clause 10, comprising acquiring a set of nodes for validation from a node resource pool via a resource pool manager.
12. The method of clause 11, wherein the node resource pool includes nodes from at least one of customer production environments, customer validation environments, and/or third-party environments provided as a service from a vendor or an ecosystem partner of the vendor.
13. The method of clause 10, comprising adapting and regenerating a configuration based on feedback generated while validating the generated configurations.
14. The method of clause 10, comprising deploying a validated configuration to the nodes.
15. The method of clause 14, comprising deploying the validated configuration to the nodes automatically based on a configurable level of system autonomy.
16. The method of clause 10, comprising generating an update to a knowledge base article based on a validated configuration via a neural network model configured to generate the update to the knowledge base article based an existing knowledge base article.
17. A non-transitory machine-readable medium having instructions stored thereon, the instructions, when executed, cause one or more processors to perform operations comprising:
   receiving a prompt at a network configuration maintainer to generate a network configuration;
   searching a network configuration database based on the prompt to retrieve a network configuration; generating a query based on the prompt and the network configuration;
   processing the query via a neural network model to generate a new network configuration;
   validating the new network configuration via a network configuration validator; and adding the new network configuration to the network configuration database after validation of the new network configuration.
18. The non-transitory machine-readable medium of clause 17, the operations comprising autonomously selecting a network configuration from the network configuration database based on telemetry received for a network associated with the network configuration.
19. The non-transitory machine-readable medium of clause 17, the network configuration validator including a digital twin of a network associated with the network configuration, the digital twin to represent a layout of a network infrastructure.
20. The non-transitory machine-readable medium of clause 19, the operations comprising simulating a traffic pattern and a data flow via the digital twin to estimate an outcome of implementing the network configuration selected from the network configuration database.

## Claims

1. A data processing system comprising:
memory to store instructions; and
one or more processors configured to execute the instructions, the instructions to provide a system to generate and validate configurations for nodes, the system comprising:
first instructions configured to retrieve information related to a release of a new ingredient for a node, the new ingredient including at least one of software, firmware, operating system, and/or hardware;
second instructions configured to receive information from the first instructions in response to the release of the new ingredient and generate a new configuration based on the information received from the first instructions;
third instructions configured to validate the new configuration; and
fourth instructions configured to manage validated configurations to be deployed to the nodes.

2. The data processing system of claim 1, the system further comprising:
a fifth instructions configured to interact with a node resource pool and acquire a set of nodes for configuration validation, wherein the third instructions interact with the fifth instructions to validate the new configuration.

3. The data processing system of claim 2, wherein the node resource pool includes nodes from at least one of customer production environments, customer validation environments, and/or third-party environments provided as a service from a vendor or an ecosystem partner of the vendor.

4. The data processing system of any one of claims 1-3, wherein the third instructions and the second instructions are configured to establish a feedback channel to adapt and regenerate a configuration.

5. The data processing system of claim 4, the system comprising sixth instructions to deploy a validated configuration to the nodes, wherein the sixth instructions are configured to deploy the validated configuration to the nodes automatically based on a configurable level of system autonomy.

6. The data processing system of any one of claims 1-5, wherein the second instructions are configured to generate a prioritized queue of configurations to generate and the third instructions are configured to validate configurations within the prioritized queue of configurations according to a configuration priority.

7. The data processing system of any one of claims 1-5, the system comprising seventh instructions to generate an update to a knowledge base article based on a validated configuration, wherein the seventh instructions include or are associated with a neural network model configured to generate the update to the knowledge base article based an existing knowledge base article.

8. The data processing system of claim 7, the seventh instructions including or associated with a neural network model configured to generate the update to the knowledge base article based an existing knowledge base article.

9. A method for generating and validating configurations for nodes, comprising:
receiving information in response to detection of a release of a new ingredient or configuration applicable to a node, the new ingredient including at least one of software, firmware, operating system, and/or hardware;
generating new configurations based on received information;
validating generated configurations; and
deploying validated configurations to the nodes.

10. The method of claim 9, comprising acquiring a set of nodes for validation from a node resource pool via a resource pool manager.

11. The method of claim 10, wherein the node resource pool includes nodes from at least one of customer production environments, customer validation environments, and/or third-party environments provided as a service from a vendor or an ecosystem partner of the vendor.

12. The method of any one of claims 9-11, comprising adapting and regenerating a configuration based on feedback generated while validating the generated configurations.

13. The method of any one of claims 9-11, comprising deploying a validated configuration to the nodes automatically based on a configurable level of system autonomy.

14. The method of any one of claims 9-11, comprising generating an update to a knowledge base article based on a validated configuration via a neural network model configured to generate the update to the knowledge base article based an existing knowledge base article.

15. A non-transitory machine-readable medium having instructions stored thereon, the instructions, when executed, cause one or more processors to perform operations of a method as in any one of claims 9-14.
